# EUROPEAN PATENT APPLICATION

(11) **EP 4 844 998 A1**
(43) Date of publication of application: **25.11.2026**
(21) Application number: 26179701.3
(22) Date of filing: 19.05.2026
(51) Int. Cl.: H02K 9/19, B60K 11/02, H02K 1/20, H02K 5/20

(54) **POWERTRAIN FOR THREE-PHASE COPPER BUSBAR HEAT DISSIPATION AND ELECTRIC VEHICLE**

(30) Priority: 20.05.2025 CN 202510654047
(71) Applicant: HUAWEI TECHNOLOGIES CO., LTD., Shenzhen 518129 (CN)
(72) Inventor: HUANGFU, Yuzhao, 518129 Shenzhen (CN); YAO, Zirong, 518129 Shenzhen (CN); WU, Jin, 518129 Shenzhen (CN); WU, Hao, 518129 Shenzhen (CN)
(74) Representative: Gill Jennings & Every LLP

(57) **Abstract**

This application provides a powertrain for three-phase copper busbar heat dissipation and an electric vehicle, and relates to the field of electric vehicle technologies. The powertrain includes a drive motor and a three-phase copper busbar. An oil cooling loop of the powertrain includes a circumferential flow channel, a copper busbar cooling flow channel, and a stator cooling flow channel. The circumferential flow channel is configured to receive oil heat-exchanged by a heat exchanger. The copper busbar cooling flow channel is configured to transmit oil to cool the three-phase copper busbar. The stator cooling flow channel is configured to transmit oil to cool a stator of the drive motor. The circumferential flow channel is distributed in a circumferential direction of the drive motor. A position at which the circumferential flow channel communicates with the copper busbar cooling flow channel and a position at which the circumferential flow channel communicates with the stator cooling flow channel are spaced apart. The copper busbar cooling flow channel and the stator cooling flow channel are configured to distribute oil in the circumferential flow channel. In embodiments of this application, the circumferential flow channel for cooling the motor stator is bypassed by a copper busbar cooling flow channel to directly cool the three-phase copper busbar, thereby shortening a length of an oil path. The copper busbar cooling flow channel and the stator cooling flow channel are connected in parallel, thereby improving cooling efficiency for the copper busbar.

## Description

### TECHNICAL FIELD

This application relates to the field of electric vehicle technologies, and in particular, to a powertrain for three-phase copper busbar heat dissipation and an electric vehicle.

### BACKGROUND

A powertrain of a new energy vehicle circulates oil through an internal oil pump to cool heat-generating components such as a stator of a drive motor and a reducer.

With the development of technologies, the powertrain develops toward a high rotation speed, high integration, and high efficiency, and some components gradually generate increasing heat. However, an existing powertrain has an insufficient heat dissipation capability for heat-generating components such as a three-phase copper busbar, and a design of a cooling oil path inside the powertrain needs to be improved.

### SUMMARY

This application provides a powertrain for three-phase copper busbar heat dissipation. The powertrain includes a drive motor and a three-phase copper busbar. The drive motor is configured to receive, through the three-phase copper busbar, an alternating current output by a drive motor control unit. An oil cooling loop of the powertrain includes a circumferential flow channel, a copper busbar cooling flow channel, and a stator cooling flow channel. The circumferential flow channel is configured to receive oil heat-exchanged by a heat exchanger. The copper busbar cooling flow channel is configured to transmit oil to cool the three-phase copper busbar. The stator cooling flow channel is configured to transmit oil to cool a stator of the drive motor. The circumferential flow channel is distributed in a circumferential direction of the drive motor. A position at which the circumferential flow channel communicates with the copper busbar cooling flow channel and a position at which the circumferential flow channel communicates with the stator cooling flow channel are spaced apart. The copper busbar cooling flow channel and the stator cooling flow channel are configured to distribute oil in the circumferential flow channel. In this embodiment of this application, the circumferential flow channel for cooling the motor stator is bypassed by a copper busbar cooling flow channel to directly cool the three-phase copper busbar, and the oil that is received by the circumferential flow channel and that is heat-exchanged by the heat exchanger is used to cool the three-phase copper busbar, thereby improving use efficiency of an oil passage within the powertrain. In this way, the circumferential flow channel can distribute some oil to cool the three-phase copper busbar. In this application, the copper busbar cooling flow channel for cooling the three-phase copper busbar receives, through transfer by the circumferential flow channel, the oil heat-exchanged by the heat exchanger, so that an oil path between the circumferential flow channel and the heat exchanger can be used to shorten a length of the oil path, simplify a structure, and reduce costs. In addition, the oil in the circumferential flow channel is low-temperature oil heat-exchanged by the heat exchanger, and the copper busbar cooling flow channel split from the circumferential flow channel and the stator cooling flow channel are connected in parallel, to avoid a case in which heated oil in the stator cooling flow channel enters the copper busbar cooling flow channel and consequently cooling efficiency for the three-phase copper busbar is affected, thereby improving the cooling efficiency for the copper busbar.

In a possible implementation, the position at which the circumferential flow channel communicates with the copper busbar cooling flow channel and a position at which the circumferential flow channel is configured to receive the oil heat-exchanged by the heat exchanger are spaced apart in the circumferential direction of the drive motor. An inner wall on a radial inner side of the circumferential flow channel exchanges heat with the stator, and heat from the stator gradually heats the flowing oil, to properly increase a temperature of oil flowing into the copper busbar cooling flow channel from the circumferential flow channel, and prevent the low-temperature oil heat-exchanged by the heat exchanger from directly entering the copper busbar cooling flow channel to cool the three-phase copper busbar in a high-temperature state. While cooling the three-phase copper busbar, this prevents a sudden temperature change, in the three-phase copper busbar, that affects stability of electric energy transmission. In addition, the heated oil in the circumferential flow channel helps decrease viscosity of the oil, and improve uniformity of oil sprayed from the copper busbar cooling flow channel onto the three-phase copper busbar, to improve the cooling efficiency for the three-phase copper busbar.

In a possible implementation, the position at which the circumferential flow channel communicates with the copper busbar cooling flow channel and the position at which the circumferential flow channel communicates with the stator cooling flow channel are spaced apart in the circumferential direction of the drive motor. The oil in the circumferential flow channel flows in a circumferential direction of the stator. When a position of a first liquid port on the flow channel is reached, the oil does not enter a second liquid port, but needs to flow in the circumferential direction for a distance before entering the second liquid port. This avoids a case in which the circumferential flow channel performs distribution at a same position and consequently the copper busbar cooling flow channel and the stator cooling flow channel receive an insufficient amount of oil.

In a possible implementation, the circumferential flow channel is configured to receive, through a plurality of liquid inlet flow channels, the oil heat-exchanged by the heat exchanger, and positions at which the plurality of liquid inlet flow channels communicate with the circumferential flow channel are configured to be spaced apart in the circumferential direction of the drive motor. The plurality of liquid inlet flow channels are disposed, and third liquid ports communicating with the plurality of liquid inlet flow channels are disposed at an interval in the circumferential direction of the drive motor, so that an amount of oil that is obtained by the circumferential flow channel through the liquid inlet flow channels and that is heat-exchanged by the heat exchanger can be increased, to provide a sufficient amount of oil for subsequent distribution to the copper busbar cooling flow channel and the stator cooling flow channel, and avoid a case in which there is an insufficient amount of oil in the circumferential flow channel and consequently cooling of the stator and the three-phase copper busbar is affected.

In a possible implementation, a housing of the powertrain encloses a motor cavity and the copper busbar cooling flow channel. The motor cavity is configured to accommodate the stator of the drive motor, and the copper busbar cooling flow channel is configured to: penetrate an inner wall of the motor cavity and communicate with the circumferential flow channel. In this application, the housing encloses the motor cavity and the copper busbar cooling flow channel, and the copper busbar cooling flow channel is synchronously formed by using a thickness of a cavity wall of the motor cavity. No additional design is required for a structure, a shape, and a size of the housing, and manufacturing costs of the copper busbar cooling flow channel are lower. In addition, the copper busbar cooling flow channel is disposed on a radial outer side of the motor cavity, and does not interfere with another flow channel. Therefore, there is no need to change a position and a structure of the another flow channel.

In a possible implementation, the inner wall of the motor cavity and the stator of the drive motor enclose the circumferential flow channel, and in the circumferential direction of the drive motor, the circumferential flow channel is configured to surround the stator. A circumferential flow channel of the stator serves as the circumferential flow channel, and the copper busbar cooling flow channel is synchronously enclosed with the formed housing to deliver cooling oil to the copper busbar. All improvements to the flow channel are made on the housing. For example, the copper busbar cooling flow channel is injection-molded when the motor cavity is injection-molded, to simplify a manufacturing process of the copper busbar cooling flow channel and reduce manufacturing costs.

In a possible implementation, in the circumferential direction of the drive motor, the circumferential flow channel is configured to surround an end winding, the circumferential flow channel is configured to spray oil onto the end winding through a plurality of penetrating oil spray holes, and the stator cooling flow channel is configured to receive oil sprayed from the oil spray holes. A winding oil spray ring of the stator is used to enclose the circumferential flow channel. The circumferential flow channel receives the oil heat-exchanged by the heat exchanger, sprays oil onto the end winding for cooling, and distributes oil to the copper busbar cooling flow channel to cool the three-phase copper busbar.

In a possible implementation, one part of the copper busbar cooling flow channel is configured to communicate with the circumferential flow channel in a radial direction of the stator, and the other part of the copper busbar cooling flow channel is configured to transmit oil in an axial direction of the stator to cool the three-phase copper busbar. One part of the copper busbar cooling flow channel extends in the radial direction of the stator, so that one side of the copper busbar cooling flow channel can be close to the circumferential flow channel, and communicate with the circumferential flow channel, to ensure that the oil in the circumferential flow channel can flow into the copper busbar cooling flow channel. The other part of the copper busbar cooling flow channel extends in the axial direction of the stator, so that the copper busbar cooling flow channel can penetrate the inner wall of the motor cavity, and the oil in the circumferential flow channel can be transmitted to the three-phase copper busbar through the copper busbar cooling flow channel, to dissipate heat for the three-phase copper busbar.

In a possible implementation, in an axial direction of the powertrain, the copper busbar cooling flow channel and the heat exchanger are configured to be located on two axial sides of the powertrain . The copper busbar cooling flow channel and the heat exchanger are located on the two axial sides of the powertrain, to match the three-phase copper busbar disposed on one side of the powertrain, and direct the oil to smoothly flow to the three-phase copper busbar, so as to dissipate heat for the three-phase copper busbar. In addition, the three-phase copper busbar is located on a side that is of the heat exchanger and that is close to the motor stator, to simplify disposition of the copper busbar cooling flow channel, and avoid a case in which a long copper busbar cooling flow channel needs to be disposed because the copper busbar cooling flow channel is far away from the three-phase copper busbar.

In a possible implementation, the powertrain includes a motor bearing cooling flow channel, and the motor bearing cooling flow channel is configured to: receive oil from the circumferential flow channel and transmit the oil to cool a motor bearing of the drive motor. The motor bearing cooling flow channel is disposed, and the motor bearing cooling flow channel separately communicates with the circumferential flow channel and a cavity in which the motor bearing is located, so that the oil in the circumferential flow channel can pass through the motor bearing cooling flow channel to deliver oil to the motor bearing, and dissipate heat for and lubricate the motor bearing, so as to ensure running reliability of the motor bearing.

In a possible implementation, a position at which the motor bearing cooling flow channel communicates with the circumferential flow channel and the position at which the circumferential flow channel is configured to receive the oil heat-exchanged by the heat exchanger are spaced apart in the circumferential direction of the drive motor. By setting the position at which the motor bearing cooling flow channel communicates with the circumferential flow channel and the position at which the circumferential flow channel receives the oil heat-exchanged by the heat exchanger to be spaced apart in the circumferential direction of the drive motor, a temperature of the low-temperature oil from the heat exchanger is increased after the oil flows through the circumferential flow channel. The motor bearing cooling flow channel is configured to: receive the oil whose temperature is increased in the circumferential flow channel and transmit the oil to the motor bearing, so that viscosity of the oil flowing through the motor bearing is decreased, to reduce running resistance of the oil to the motor bearing and improve running efficiency of the drive motor.

In a possible implementation, the motor bearing cooling flow channel is configured to: separately receive oil heat-exchanged by the heat exchanger and the oil from the circumferential flow channel, and combine the two paths of oil to cool the motor bearing. The motor bearing cooling flow channel separately receives the low-temperature oil heat-exchanged by the heat exchanger and the oil from the circumferential flow channel, mixes the two types of oil at different temperatures, and then transmits the oil to the motor bearing, to adjust a temperature of oil in the motor bearing cooling flow channel through the circumferential flow channel, control the oil to lubricate and cool the motor bearing at a proper temperature, and find an optimal balance point between the temperature and the viscosity.

In a possible implementation, the powertrain includes a resolver sensor. A motor shaft of the drive motor is configured to be fastened to the resolver sensor, and the motor bearing and the resolver sensor are configured to be located on a same side of the stator of the drive motor. The motor bearing and the resolver sensor are located on the same side of the stator of the drive motor, so that the resolver sensor can detect a rotation speed of the motor bearing on the side. When the rotation speed of the motor bearing is excessively high, oil flows into the motor bearing on the resolver side through the motor bearing cooling flow channel, to ensure lubrication effect and heat dissipation effect of the motor bearing.

In a possible implementation, the circumferential flow channel is configured to receive, through a liquid inlet flow channel, the oil heat-exchanged by the heat exchanger, and an inner diameter of the copper busbar cooling flow channel is less than an inner diameter of the liquid inlet flow channel. The inner diameter of the copper busbar cooling flow channel is less than the inner diameter of the liquid inlet flow channel, to avoid a case in which the inner diameter of the copper busbar cooling flow channel is excessively large and consequently an amount of oil in another liquid inlet flow channel communicating with the circumferential flow channel is affected, thereby improving cooling efficiency for each component in the drive motor.

This application further provides an electric vehicle, including a powertrain and a wheel. The powertrain is configured to drive the wheel to rotate. In this application, both a copper busbar cooling flow channel and a stator cooling flow channel are disposed to communicate with a circumferential flow channel, so that oil in the circumferential flow channel can flow into a three-phase copper busbar through the copper busbar cooling flow channel, and flow into a motor stator through the stator cooling flow channel, to improve heat dissipation for the three-phase copper busbar and the motor stator. In addition, a position at which the copper busbar cooling flow channel communicates with the circumferential flow channel and a position at which the stator cooling flow channel communicates with the circumferential flow channel are spaced apart, so that the circumferential flow channel separately distributes oil to the stator cooling flow channel and the copper busbar cooling flow channel at different positions in a circumferential direction of a drive motor, to ensure a sufficient amount of oil in the copper busbar cooling flow channel and the stator cooling flow channel, so as to improve heat dissipation effect for the drive motor and the three-phase copper busbar, and implement oil lubrication for the drive motor. This improves running efficiency of the drive motor, thereby improving overall performance of the electric vehicle.

### BRIEF DESCRIPTION OF DRAWINGS

FIG. 1 is a diagram of an electric vehicle according to an embodiment of this application;
FIG. 2 is a diagram of a powertrain according to an implementation of this application;
FIG. 3 is a diagram of a powertrain according to an implementation of this application;
FIG. 4 is a diagram of a stator according to an implementation of this application;
FIG. 5 is a diagram of a powertrain according to an implementation of this application;
FIG. 6 is a sectional view of a stator according to an implementation of this application;
FIG. 7 is a diagram of a powertrain in which a plurality of liquid inlet flow channels are connected in parallel according to an implementation of this application;
FIG. 8 is a diagram of a powertrain in which a plurality of liquid inlet flow channels are connected in parallel according to an implementation of this application;
FIG. 9 is a diagram of a stator according to an implementation of this application;
FIG. 10 is a diagram of a stator according to an implementation of this application;
FIG. 11 is a diagram of a stator according to an implementation of this application;
FIG. 12 is a diagram of a stator according to an implementation of this application;
FIG. 13 is a partial view of a powertrain according to an implementation of this application;
FIG. 14 is a diagram of a powertrain according to an implementation of this application;
FIG. 15 is a diagram of a stator according to an implementation of this application;
FIG. 16 is a diagram of a powertrain according to an implementation of this application;
FIG. 17 is a diagram of a powertrain according to an implementation of this application;
FIG. 18 is a diagram of a powertrain with a resolver sensor according to an implementation of this application; and
FIG. 19 is a diagram of a powertrain according to an implementation of this application.

### DESCRIPTION OF EMBODIMENTS

The following describes embodiments of this application with reference to the accompanying drawings in embodiments of this application.

In a running process of a motor, a working condition changes frequently and a large amount of heat is generated. Consequently, a temperature of the motor is increased, affecting a life and security of the motor. Currently, an oil pump disposed in a powertrain drives oil to flow in the powertrain. The oil cooled by a heat exchanger flows into a stator of a drive motor to cool the motor stator. The cooled oil flows back to a reducer cavity, and the oil in the reducer cavity is absorbed by the oil pump to form a circulation of the oil. Currently, with the development of new energy vehicles, a higher requirement is imposed on cooling efficiency of the powertrain. Currently, there is insufficient cooling for a three-phase copper busbar, and the three-phase copper busbar generates heat when transmitting electric energy from a power battery to the drive motor. If no effective heat dissipation is available, a service life of the copper busbar is reduced.

To resolve the foregoing problem, embodiments of this application provide a powertrain for three-phase copper busbar heat dissipation. The powertrain includes a drive motor and a three-phase copper busbar. The drive motor is configured to receive, through the three-phase copper busbar, an alternating current output by a motor control unit. An oil cooling loop of the powertrain includes a circumferential flow channel, a copper busbar cooling flow channel, and a stator cooling flow channel. The circumferential flow channel is configured to receive oil heat-exchanged by a heat exchanger. The copper busbar cooling flow channel is configured to transmit oil to cool the three-phase copper busbar. The stator cooling flow channel is configured to transmit oil to cool a stator of the drive motor. The circumferential flow channel is distributed in a circumferential direction of the drive motor. A position at which the copper busbar cooling flow channel communicates with the circumferential flow channel and a position at which the stator cooling flow channel communicates with the circumferential flow channel are spaced apart. The copper busbar cooling flow channel and the stator cooling flow channel are configured to distribute oil in the circumferential flow channel. In embodiments of this application, the circumferential flow channel for cooling the motor stator is bypassed by a copper busbar cooling flow channel to directly cool the three-phase copper busbar, and the oil that is received by the circumferential flow channel and that is heat-exchanged by the heat exchanger is used to cool the three-phase copper busbar, thereby improving use efficiency of an oil passage within the powertrain. In this way, the circumferential flow channel can distribute some oil to cool the three-phase copper busbar. In this application, the copper busbar cooling flow channel for cooling the three-phase copper busbar receives, through transfer by the circumferential flow channel, the oil heat-exchanged by the heat exchanger, so that an oil path between the circumferential flow channel and the heat exchanger can be used to shorten a length of the oil path, simplify a structure, and reduce costs. In addition, the oil in the circumferential flow channel is low-temperature oil heat-exchanged by the heat exchanger, and the copper busbar cooling flow channel split from the circumferential flow channel and the stator cooling flow channel are connected in parallel, to avoid a case in which heated oil in the stator cooling flow channel enters the copper busbar cooling flow channel and consequently cooling efficiency for the three-phase copper busbar is affected, thereby improving the cooling efficiency for the copper busbar.

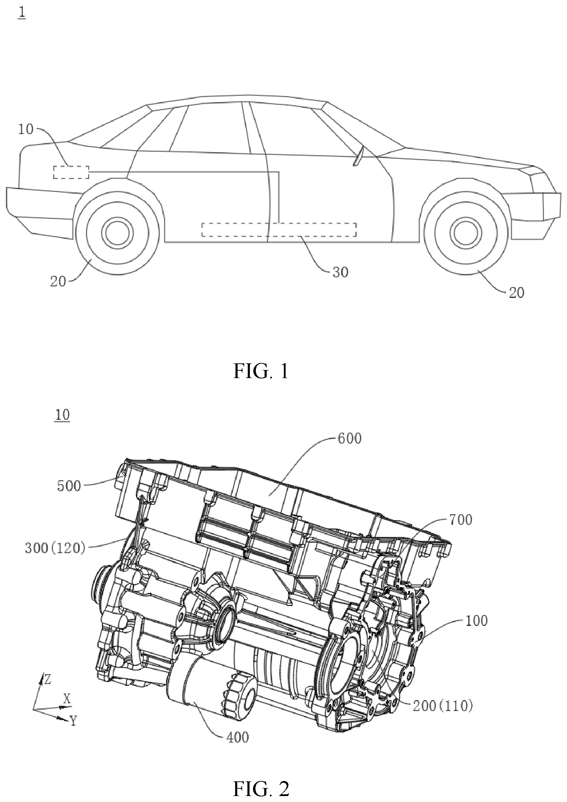

An embodiment of this application provides an electric vehicle. FIG. 1 is a diagram of an electric vehicle 1 according to an embodiment of this application. With reference to FIG. 1, the electric vehicle 1 includes a powertrain 10 and a plurality of wheels 20. The powertrain 10 can provide power to the wheels 20 of the electric vehicle 1. The powertrain 10 is connected to the wheels 20 through transmission. The powertrain 10 is configured to drive the plurality of wheels 20 to rotate, to drive the electric vehicle 1 to move forward or backward. In an embodiment, the electric vehicle 1 is a front-wheel drive vehicle or a rear-wheel drive vehicle, and the powertrain 10 is configured to drive a front wheel or a rear wheel of the electric vehicle 1. In an embodiment, the electric vehicle 1 is a two-wheel drive vehicle or a four-wheel drive vehicle, and the powertrain 10 is configured to drive two wheels 20 or four wheels 20 of the electric vehicle 1 to rotate.

In an embodiment, the electric vehicle 1 further includes a power battery 30. The power battery 30 is configured to store electric energy input by an external power supply, and is further configured to supply power to the powertrain 10. The powertrain 10 receives electric energy from the power battery 30, and converts the electric energy into mechanical energy to drive the wheel 20 to rotate.

In this embodiment of this application, the electric vehicle 1 includes a two-wheeled vehicle, a three-wheeled vehicle, a four-wheeled vehicle, or the like. In this embodiment of this application, the electric vehicle 1 includes a battery electric vehicle (BEV, Battery Electric Vehicle), a hybrid electric vehicle (HEV, Hybrid Electric Vehicle), and a range extended electric vehicle (REEV, Range Extended Electric Vehicle). In an embodiment, the electric vehicle 1 is a transportation means. For example, the electric vehicle 1 is one of a commercial vehicle, a passenger vehicle, a motorcycle, or a flying car.

An embodiment of this application provides a powertrain 10. FIG. 2 is a diagram of a powertrain 10 according to an implementation of this application. With reference to FIG. 2, the powertrain 10 includes a housing 100, a drive motor 200, and a reducer 300. The housing 100 is configured to enclose and fasten the drive motor 200 and the reducer 300. The drive motor 200 is configured to be connected to the reducer 300 through transmission. The drive motor 200 is configured to: convert electric energy into mechanical energy and drive, through the reducer 300, the wheel 20 of the electric vehicle 1 to rotate.

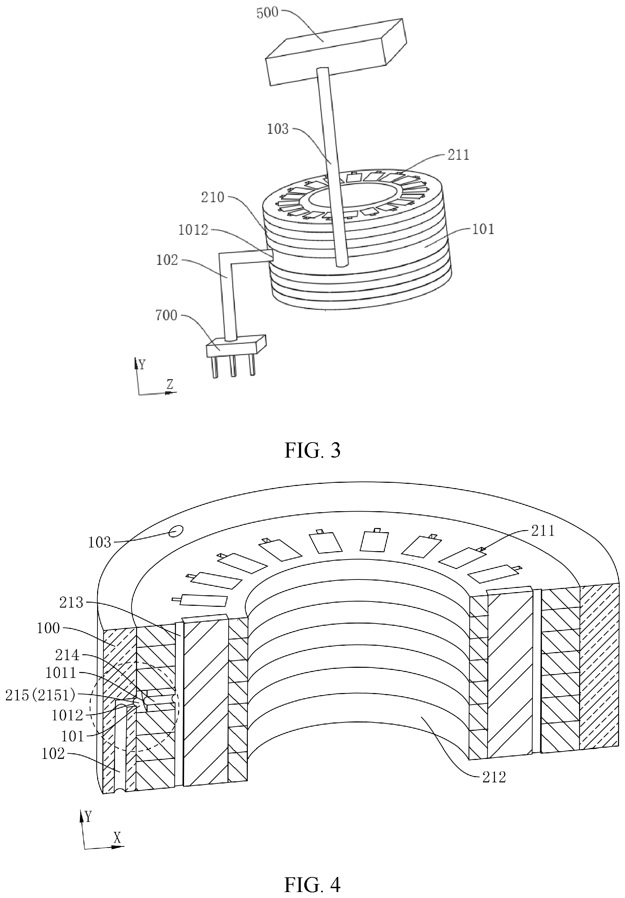

Refer to FIG. 2, FIG. 3, and FIG. 4. FIG. 3 is a diagram of a powertrain 10 according to an implementation of this application, and FIG. 4 is a diagram of a stator 210 according to an implementation of this application. In an embodiment, the housing 100 encloses one motor cavity 110 and one reducer cavity 120. The motor cavity 110 is configured to accommodate the stator 210 and a rotor 220 of the drive motor 200. The reducer cavity 120 is configured to accommodate transmission members such as a transmission shaft and a gear of the reducer 300. In an embodiment, in an axial direction of the powertrain 10, a part of the rotor 220 of the drive motor 200 passes through the motor cavity 110 to the reducer cavity 120, and is rotatably connected to an input shaft of the reducer 300 in the reducer cavity 120, so that rotation of the rotor 220 drives the input shaft to rotate. In an embodiment, in the axial direction of the powertrain 10, the input shaft of the reducer 300 passes through the reducer cavity 120 to the motor cavity 110, and is rotatably connected to the rotor 220 of the drive motor 200 in the motor cavity 110, so that rotation of the rotor 220 drives the input shaft to rotate.

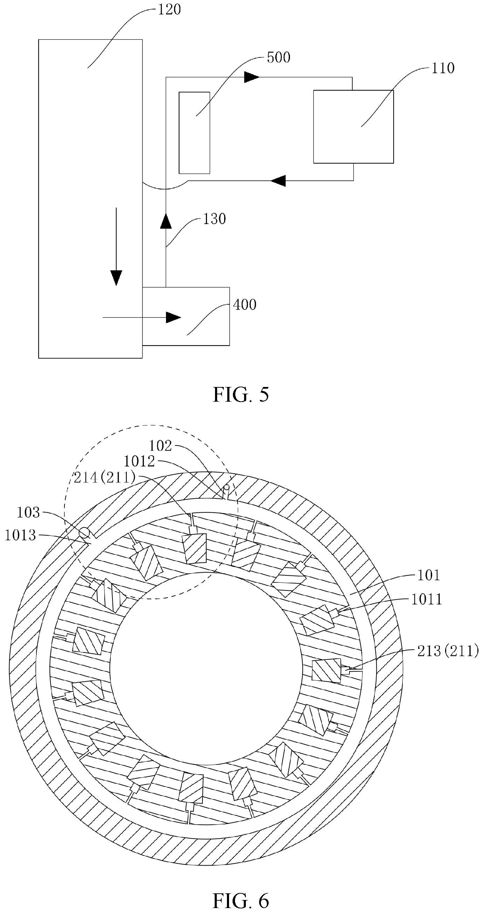

Refer to FIG. 1, FIG. 2, FIG. 3, and FIG. 5. FIG. 5 is a diagram of a powertrain 10 according to an implementation of this application. In an embodiment, the powertrain 10 includes an oil pump 400 and a heat exchanger 500. The oil pump 400 is configured to: recover oil stored at a bottom of the reducer cavity 120 and provide a driving force to the oil to drive the oil to flow through the heat exchanger 500 for cooling. Under driving of the oil pump 400, the cooled oil enters the stator 210 of the drive motor 200, and cools the stator 210. Under action of gravity and driving of the oil pump 400, the oil flowing through the stator 210 flows into the reducer cavity 120, and finally flows back to the oil pump 400, to form circulating cooling for the stator 210 of the drive motor 200 in the powertrain 10.

In an embodiment, one part of the oil recovered by the oil pump 400 flows into the stator 210 to cool the stator 210, and the other part flows into the reducer cavity 120 to lubricate and cool an intermediate shaft and an output shaft of the reducer 300, and falls into the bottom of the reducer cavity 120 under action of gravity after lubrication and cooling. The oil is recovered by the oil pump 400 to form circulating lubrication and cooling of the oil in the reducer cavity 120.

In an embodiment, the powertrain 10 further includes a motor control unit 600 and a three-phase copper busbar 700. The motor control unit 600 is configured to receive power supplied by the power battery 30, and the motor control unit 600 is configured to: convert a direct current into an alternating current and transmit the alternating current to the drive motor 200. The drive motor 200 converts electric energy into mechanical energy, and the drive motor 200 is configured to be connected to the reducer 300 through transmission. The three-phase copper busbar 700 is located at one end of the housing 100, and is configured to electrically connect the motor control unit 600 and the drive motor 200, so that the motor control unit 600 converts a direct current into an alternating current and transmits the alternating current to the drive motor 200. Power output by the drive motor 200 may be transferred to the reducer 300, and is output to the drive wheel 20 after being decelerated and torque-increased by the reducer 300, to drive the electric vehicle 1 to travel.

The following describes in detail the powertrain 10 provided in embodiments of this application. For ease of description, in FIG. 2, FIG. 3, and FIG. 4 in this application, the axial direction of the powertrain 10 is a Y direction or a direction parallel to a Y direction, and a radial direction of the powertrain 10 is a direction perpendicular to the axial direction of the powertrain 10. The following is the same as this.

Refer to FIG. 2, FIG. 3, FIG. 4, and FIG. 5. In an embodiment, an oil cooling loop of the powertrain 10 includes a circumferential flow channel 101, a copper busbar cooling flow channel 102, and a stator cooling flow channel 211. The circumferential flow channel 101 is configured to receive oil heat-exchanged by the heat exchanger 500. The copper busbar cooling flow channel 102 is configured to transmit oil to cool the three-phase copper busbar 700. The stator cooling flow channel 211 is configured to transmit oil to cool the stator 210 of the drive motor 200.

In an embodiment, all of the circumferential flow channel 101, the copper busbar cooling flow channel 102, and the stator cooling flow channel 211 are configured to accommodate and circulate oil, and the oil flows in each flow channel under driving of the oil pump 400. In an embodiment, under driving action of the oil pump 400, the oil first flows through a housing flow channel 130 for circulation to the heat exchanger 500. The housing flow channel 130 is formed through enclosing by the housing 100. The housing flow channel 130 may be formed when the housing 100 is injection-molded. Alternatively, after the housing 100 is formed through injection molding, the housing flow channel 130 may be formed in the housing 100 by drilling a hole. In an embodiment, the housing 100 encloses an oil path of the heat exchanger 500, and the oil path of the heat exchanger 500 is configured to be close to or in contact with a water cooling flow channel of the heat exchanger 500. Oil circulating through the housing flow channel 130 enters the oil path of the heat exchanger 500, and the oil in the oil path of the heat exchanger 500 is cooled to a lower temperature through heat exchange with low-temperature water in the heat exchanger 500, and is transmitted to a liquid inlet flow channel 103 enclosed by the housing 100. The liquid inlet flow channel 103 at least partially extends in the axial direction of the powertrain 10, to transmit the low-temperature oil from a side close to the reducer cavity 120 to a position of the stator 210 of the drive motor 200.

Refer to FIG. 3, and FIG. 4. In an embodiment, the liquid inlet flow channel 103 extends in the axial direction of the powertrain 10 in a cavity wall of the motor cavity 110, and the liquid inlet flow channel 103 has an opening on an inner wall of the motor cavity 110. The opening is used to transmit the low-temperature oil to the circumferential flow channel 101 for cooling the drive motor. In an embodiment, the circumferential flow channel 101 is a channel that is formed through enclosing by the housing 100 and the stator 210, that has specific accommodation space, and that is configured to accommodate and circulate oil. One part of an inner wall of the circumferential flow channel 101 is the inner wall of the motor cavity 110, and the other part of the inner wall is an outer wall of the stator 210. In an embodiment, the circumferential flow channel 101 is formed through enclosing by an independent casing, and the casing and the housing 100 are of independent structures. The casing encloses to form a channel that has specific accommodation space and that is configured to accommodate and circulate oil, and the casing is fastened in the motor cavity 110. For a plurality of specific implementations of the circumferential flow channel 101, refer to detailed descriptions in the following embodiments.

Refer to FIG. 3 and FIG. 4. In an embodiment, the circumferential flow channel 101 is distributed in a circumferential direction of the drive motor. A position at which the circumferential flow channel 101 communicates with the copper busbar cooling flow channel 102 and a position at which the circumferential flow channel 101 communicates with the stator cooling flow channel 211 are spaced apart in the circumferential direction of the drive motor. The copper busbar cooling flow channel 102 and the stator cooling flow channel 211 are configured to distribute oil in the circumferential flow channel 101.

Refer to FIG. 2, FIG. 3, and FIG. 4. In an embodiment, the circumferential flow channel 101 is configured to surround the stator 210 of the drive motor 200 or an end winding in the circumferential direction of the drive motor 200. In this embodiment, an example in which the stator 210 is surrounded is used. Two liquid ports are disposed on the inner wall of the circumferential flow channel 101, and both the two liquid ports are configured to penetrate the inner wall of the circumferential flow channel 101. A first liquid port 1011 is configured to communicate with the stator cooling flow channel 211. At least a part of the stator cooling flow channel 211 is configured to: extend in an axial direction of the stator 210, and penetrate the stator 210 in the axial direction of the stator 210. In an embodiment, the stator 210 is formed by stacking a plurality of layers of laminations 212, and each lamination 212 is provided with a penetrating through hole. Through holes on any two adjacent layers of laminations 212 are opposite to each other, and through holes on the plurality of layers of stacked laminations 212 sequentially communicate to form an axial flow channel 213. The axial flow channel 213 is configured to extend in the axial direction of the stator 210. In an embodiment, at least one radial flow channel 214 is disposed in a radial direction of the stator 210, and the radial flow channel 214 is configured to communicate with the first liquid port 1011.

In an embodiment, the stator cooling flow channel 211 includes the axial flow channel 213 and the radial flow channel 214. A quantity and positions of first liquid ports 1011 correspond to a quantity and positions of openings of the radial flow channel 214 on an outer circumferential surface of the stator. Oil circulating in the circumferential flow channel 101 enters the axial flow channel 213 through the radial flow channel 214. The axial flow channel 213 is configured to accommodate oil to reduce a temperature of the stator 210. Oil circulating through the axial flow channel 213 flows out from one end or two ends of the axial flow channel 213 to cool an end winding at one end or two ends in the axial direction of the stator 210. In an embodiment, there are a plurality of axial flow channels 213, and the plurality of axial flow channels 213 are disposed at an interval in the circumferential direction of the drive motor 200. A quantity of radial flow channels 214 corresponds to a quantity of axial flow channels 213, and each axial flow channel 213 receives, through the radial flow channel 214, oil delivered by the circumferential flow channel 101.

In an embodiment, the circumferential flow channel 101 is distributed in the circumferential direction of the drive motor 200. The stator cooling flow channel 211 is located on a radial inner side of the circumferential flow channel 101. The first liquid port 1011 configured to communicate with the radial flow channel 214 is located on an inner circumferential surface of the circumferential flow channel 101, and the first liquid port 1011 is configured to penetrate a wall surface on the radial inner side of the circumferential flow channel 101. The circumferential flow channel 101, the first liquid port 1011, and the radial flow channel 214 sequentially communicate in the radial direction of the stator 210.

Refer to FIG. 3 and FIG. 4. In an embodiment, a second liquid port 1012 in the two liquid ports is configured to communicate with the copper busbar cooling flow channel 102. A part of the oil in the circumferential flow channel 101 flows into the copper busbar cooling flow channel 102 through the second liquid port 1012, and the copper busbar cooling flow channel 102 delivers the oil to the three-phase copper busbar 700 to cool the three-phase copper busbar 700. In an embodiment, an outlet of the copper busbar cooling flow channel 102 is connected to an oil spray nozzle, and the oil is sprayed onto a surface of the three-phase copper busbar 700 through the oil spray nozzle to cool the three-phase copper busbar 700.

In an embodiment, the circumferential flow channel 101 is configured to: receive low-temperature oil heat-exchanged by the heat exchanger 500, and distribute the low-temperature oil to the stator cooling flow channel 211 and the copper busbar cooling flow channel 102. In an embodiment, oil circulating through the stator cooling flow channel 211 is used to cool the stator 210, to reduce the temperature of the stator 210. The cooled oil is discharged from the drive motor, flows back to the reducer cavity, is recovered by the oil pump from the reducer cavity, and is heat-exchanged by the heat exchanger 500 again. The heat-exchanged low-temperature oil enters the circumferential flow channel 101 again, to form circulating cooling. In an embodiment, oil circulating through the copper busbar cooling flow channel 102 is used to cool the three-phase copper busbar 700, to reduce a temperature of the three-phase copper busbar 700. The cooled oil is discharged from an accommodation cavity of the three-phase copper busbar 700, flows back to the reducer cavity, is recovered by the oil pump from the reducer cavity, and is heat-exchanged by the heat exchanger 500 again. The heat-exchanged low-temperature oil enters the circumferential flow channel 101 again, to form circulating cooling.

Refer to FIG. 3 and FIG. 4. In an embodiment, the circumferential flow channel 101 communicates with the copper busbar cooling flow channel 102 at a position of the second liquid port 1012, and the circumferential flow channel 101 communicates with the stator cooling flow channel 211 at a position of the first liquid port 1011. The first liquid port 1011 and the second liquid port 1012 are spaced apart. In an embodiment, the first liquid port 1011 and the second liquid port 1012 do not overlap or coincide. Oil circulating through the first liquid port 1011 does not enter the copper busbar cooling flow channel 102, and oil circulating through the second liquid port 1012 does not enter the stator cooling flow channel 211.

In this embodiment of this application, the circumferential flow channel 101 for cooling the motor stator 210 is bypassed by a copper busbar cooling flow channel 102 to directly cool the three-phase copper busbar 700, and the oil that is received by the circumferential flow channel 101 and that is heat-exchanged by the heat exchanger 500 is used to cool the three-phase copper busbar 700, thereby improving use efficiency of an oil passage within the powertrain 10, so that the circumferential flow channel 101 can distribute some oil to cool the three-phase copper busbar 700. In this application, the copper busbar cooling flow channel 102 for cooling the three-phase copper busbar 700 receives, through transfer by the circumferential flow channel 101, the oil heat-exchanged by the heat exchanger 500, so that an oil path between the circumferential flow channel 101 and the heat exchanger 500 can be used to shorten a length of the oil path, simplify a structure, and reduce costs. In addition, the oil in the circumferential flow channel 101 is low-temperature oil heat-exchanged by the heat exchanger 500, and the copper busbar cooling flow channel 102 split from the circumferential flow channel 101 and the stator cooling flow channel 211 are connected in parallel, to avoid a case in which heated oil in the stator cooling flow channel 211 enters the copper busbar cooling flow channel 102 and consequently cooling efficiency for the three-phase copper busbar is affected, thereby improving the cooling efficiency for the three-phase copper busbar 700.

In an embodiment, it should be noted that in the foregoing embodiments of this application, only the three-phase copper busbar 700 is used as an example to provide an embodiment in which the low-temperature oil that is received from the circumferential flow channel 101 and that is heat-exchanged by the heat exchanger 500 is distributed to the three-phase copper busbar 700 to cool the three-phase copper busbar 700. On a basis of the foregoing embodiments, for other components that need to be cooled, for example, a bearing, a structure similar to the copper busbar cooling flow channel 102 may be used for flow guiding and heat dissipation.

Refer to FIG. 3 and FIG. 6. FIG. 6 is a sectional view of a stator 210 according to an implementation of this application. In an embodiment, the position at which the circumferential flow channel 101 communicates with the copper busbar cooling flow channel 102 and a position at which the circumferential flow channel 101 is configured to receive the oil heat-exchanged by the heat exchanger 500 are spaced apart in the circumferential direction of the drive motor.

In an embodiment, a second liquid port 1012 is disposed on the inner wall of the circumferential flow channel 101, and the second liquid port 1012 is configured to communicate with the copper busbar cooling flow channel 102. The oil in the circumferential flow channel 101 flows into the copper busbar cooling flow channel 102 through the second liquid port 1012, and the copper busbar cooling flow channel 102 delivers the oil to the three-phase copper busbar 700 to cool the three-phase copper busbar 700. In an embodiment, an outlet of the copper busbar cooling flow channel 102 is connected to an oil spray nozzle, and the oil is sprayed onto a surface of the three-phase copper busbar 700 through the oil spray nozzle to cool the three-phase copper busbar 700.

In an embodiment, a liquid distribution port disposed on the inner wall of the circumferential flow channel 101 further includes a third liquid port 1013. The third liquid port 1013 is configured to communicate with a liquid inlet flow channel 103, and the liquid inlet flow channel 103 is configured to: receive oil heat-exchanged by the heat exchanger 500, and transmit the low-temperature oil to the circumferential flow channel 101 through the third liquid port 1013. In an embodiment, the liquid inlet flow channel 103 extends in the axial direction of the powertrain 10, to transmit low-temperature oil that is heat-exchanged by the heat exchanger 500 and that is on a side that is of the powertrain 10 and that is close to the reducer 300 to the circumferential flow channel 101 surrounding a periphery of the stator 210. In an embodiment, the liquid inlet flow channel 103 is located in the cavity wall of the motor cavity 110, and low-temperature oil circulating in the liquid inlet flow channel 103 may reduce temperatures of the inner wall of the motor cavity and a medium in the motor cavity.

In an embodiment, the circumferential flow channel 101 communicates with the copper busbar cooling flow channel 102 at a position of the second liquid port 1012, and the circumferential flow channel 101 communicates with the liquid inlet flow channel 103 at a position of the third liquid port 1013, to receive the oil heat-exchanged by the heat exchanger 500. The second liquid port 1012 and the third liquid port 1013 are spaced apart in the circumferential direction of the drive motor. In an embodiment, the second liquid port 1012 and the third liquid port 1013 do not overlap or coincide. In an embodiment, both the second liquid port 1012 and the third liquid port 1013 are located on an outer circumferential surface of the circumferential flow channel 101, both the copper busbar cooling flow channel 102 and the liquid inlet flow channel 103 communicate with the circumferential flow channel 101 in the radial direction of the stator 210, and both the copper busbar cooling flow channel 102 and the liquid inlet flow channel 103 are located on a radial outer side of the circumferential flow channel 101. The second liquid port 1012 and the third liquid port 1013 are spaced apart in a circumferential direction of the circumferential flow channel 101, and the low-temperature oil entering from the liquid inlet flow channel 103 does not immediately enter the copper busbar cooling flow channel 102 in the circumferential flow channel 101, but flows in the circumferential direction of the circumferential flow channel 101 for a distance. An inner wall on a radial inner side of the circumferential flow channel 101 exchanges heat with the stator 210, and heat from the stator 210 gradually heats the flowing oil, to properly increase a temperature of oil flowing into the copper busbar cooling flow channel 102 from the circumferential flow channel 101, and prevent the low-temperature oil heat-exchanged by the heat exchanger 500 from directly entering the copper busbar cooling flow channel 102 to cool the three-phase copper busbar 700 in a high-temperature state. While cooling the three-phase copper busbar 700, this prevents a sudden temperature change, in the three-phase copper busbar 700, that affects stability of electric energy transmission. In addition, the heated oil in the circumferential flow channel 101 helps decrease viscosity of the oil, and improve uniformity of oil sprayed from the copper busbar cooling flow channel 102 onto the three-phase copper busbar 700, to improve the cooling efficiency for the three-phase copper busbar 700.

Refer to FIG. 3 and FIG. 6. In an embodiment, the position at which the circumferential flow channel 101 communicates with the copper busbar cooling flow channel 102 and a position at which the circumferential flow channel 101 communicates with the stator cooling flow channel 211 are spaced apart in the circumferential direction of the drive motor.

In an embodiment, two liquid ports are disposed on the inner wall of the circumferential flow channel 101, and both the two liquid ports are configured to penetrate the inner wall of the circumferential flow channel 101. A first liquid port 1011 is configured to communicate with the stator cooling flow channel 211, and a second liquid port 1012 is configured to communicate with the copper busbar cooling flow channel 102. The circumferential flow channel 101 communicates with the copper busbar cooling flow channel 102 at a position of the second liquid port 1012, and the circumferential flow channel 101 communicates with the stator cooling flow channel 211 at a position of the first liquid port 1011. The first liquid port 1011 and the second liquid port 1012 are configured to be spaced apart in a circumferential direction of the stator 210. For example, in a radial direction of the stator 210, a projection of the first liquid port 1011 on an inner circumferential surface of the circumferential flow channel 101 and a projection of the second liquid port 1012 on the inner circumferential surface of the circumferential flow channel 101 do not overlap or coincide, and the oil in the circumferential flow channel 101 flows in the circumferential direction of the stator 210. When the position of the first liquid port 1011 on the flow channel is reached, the oil does not enter the second liquid port 1012, but needs to flow in the circumferential direction for a distance before entering the second liquid port 1012. This avoids a case in which the circumferential flow channel 101 performs distribution at a same position and consequently the copper busbar cooling flow channel 102 and the stator cooling flow channel 211 receive an insufficient amount of oil.

In an embodiment, the first liquid port 1011 is located on a radial inner circumferential surface of the circumferential flow channel 101, the second liquid port 1012 is located on a radial outer circumferential surface of the circumferential flow channel 101, and the first liquid port 1011 and the second liquid port 1012 are configured to be spaced apart in the radial direction of the stator 210.

In an embodiment, that the position at which the circumferential flow channel 101 communicates with the copper busbar cooling flow channel 102 and a position at which the circumferential flow channel 101 communicates with the stator cooling flow channel 211 are spaced apart in the circumferential direction of the drive motor includes that the first liquid port 1011 and the second liquid port 1012 are configured to be spaced apart in either the radial direction or the circumferential direction of the stator 210.

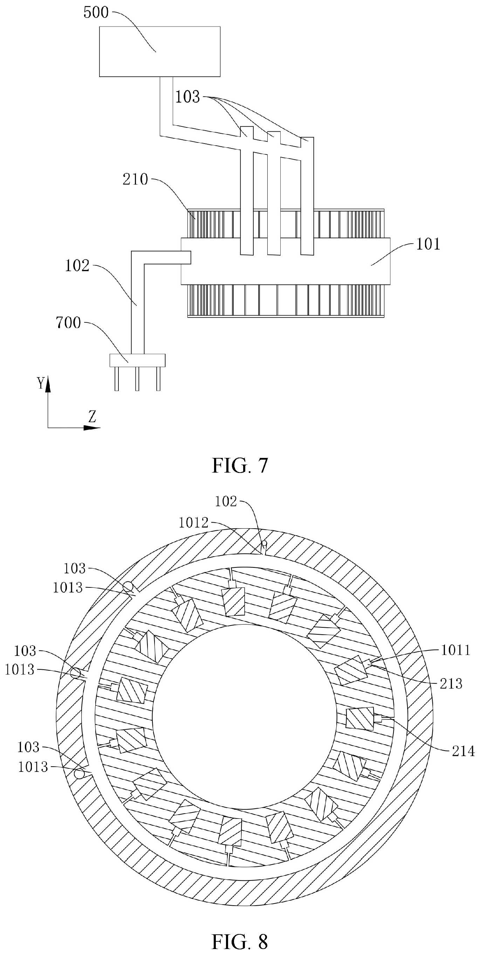

Refer to FIG. 2, FIG. 7, and FIG. 8. FIG. 7 is a diagram of a powertrain 10 in which a plurality of liquid inlet flow channels 103 are connected in parallel according to an implementation of this application, and FIG. 8 is a diagram of a powertrain 10 in which a plurality of liquid inlet flow channels 103 are connected in parallel according to an implementation of this application. In an embodiment, the circumferential flow channel 101 is configured to receive, through the plurality of liquid inlet flow channels 103, the oil heat-exchanged by the heat exchanger 500, and positions at which the plurality of liquid inlet flow channels 103 communicate with the circumferential flow channel 101 are configured to be spaced apart in the circumferential direction of the drive motor.

Refer to FIG. 2, FIG. 6, FIG. 7, and FIG. 8. In an embodiment, a third liquid port 1013 is disposed on the inner wall of the circumferential flow channel 101. The third liquid port 1013 is configured to communicate with a liquid inlet flow channel 103, and the liquid inlet flow channel 103 is configured to: receive oil heat-exchanged by the heat exchanger 500, and transmit the low-temperature oil to the circumferential flow channel 101 through the third liquid port 1013. In an embodiment, the liquid inlet flow channel 103 extends in the axial direction of the powertrain 10, to transmit low-temperature oil that is heat-exchanged by the heat exchanger 500 and that is on a side that is of the powertrain 10 and that is close to the reducer 300 to the circumferential flow channel 101 surrounding a periphery of the stator 210. In an embodiment, the liquid inlet flow channel 103 is located in the cavity wall of the motor cavity 110, and low-temperature oil circulating in the liquid inlet flow channel 103 may reduce temperatures of the inner wall of the motor cavity 110 and a medium in the motor cavity 110.

In an embodiment, there are a plurality of liquid inlet flow channels 103, and there are a plurality of corresponding third liquid ports 1013. Each liquid inlet flow channel 103 communicates with the circumferential flow channel 101 through at least one third liquid port 1013. The plurality of liquid inlet flow channels 103 are connected in parallel. The oil heat-exchanged by the heat exchanger 500 separately enters the plurality of liquid inlet flow channels 103, and flows into the circumferential flow channel 101 through the plurality of liquid inlet flow channels 103.

In an embodiment, the liquid inlet flow channel 103 communicates with the circumferential flow channel 101 at a position of the third liquid port 1013, and the plurality of third liquid ports 1013 are configured to be spaced apart in the circumferential direction of the drive motor.

In this embodiment, the plurality of liquid inlet flow channels 103 are disposed, and third liquid ports 1013 communicating with the plurality of liquid inlet flow channels 103 are disposed at an interval in the circumferential direction of the drive motor, so that an amount of oil that is obtained by the circumferential flow channel 101 through the liquid inlet flow channels 103 and that is heat-exchanged by the heat exchanger 500 can be increased, to provide a sufficient amount of oil for subsequent distribution to the copper busbar cooling flow channel 102 and the stator cooling flow channel 211, and avoid a case in which there is an insufficient amount of oil in the circumferential flow channel 101 and consequently cooling of the stator 210 and the three-phase copper busbar 700 is affected.

In an embodiment, in the plurality of third liquid ports 1013, any two adjacent third liquid ports 1013 have a same spacing in the circumferential direction of the drive motor 200, so that the oil heat-exchanged by the heat exchanger 500 can uniformly flow into the circumferential flow channel 101, to ensure uniformity of the oil in the circumferential flow channel 101 in the entire flow channel. This enables the circumferential flow channel 101 to stably provide oil to the copper busbar cooling flow channel 102 and the stator cooling flow channel 211.

Refer to FIG. 2, FIG. 3, and FIG. 4. In an embodiment, the housing 100 of the powertrain 10 encloses the motor cavity 110 and the copper busbar cooling flow channel 102, the motor cavity 110 is configured to accommodate the stator 210 of the drive motor 200, and the copper busbar cooling flow channel 102 is configured to: penetrate the inner wall of the motor cavity 110 and communicate with the circumferential flow channel 101.

In an embodiment, in the axial direction of the powertrain 10, the housing 100 includes a container, and the container and a motor cover enclose to form the motor cavity 110. The stator 210 of the drive motor 200 is accommodated and fastened in the motor cavity 110, and an outer wall of the stator 210 is fastened to the inner wall of the motor cavity 110. The stator 210 is fixed in the motor cavity 110, and the rotor 220 passes through the stator 210 and rotates relative to the stator 210.

In an embodiment, the housing 100 further encloses the copper busbar cooling flow channel 102. The copper busbar cooling flow channel 102 is a flow channel in a sidewall of the motor cavity 110, and the copper busbar cooling flow channel 102 may be formed when the motor cavity 110 of the housing 100 is formed. One end of the copper busbar cooling flow channel 102 penetrates an inner wall surface of the motor cavity 110 to communicate with the circumferential flow channel 101 in the motor cavity 110. In an embodiment, there is another container on an outer wall surface at one axial end of the housing 100, and the another container is configured to accommodate the three-phase copper busbar 700. When the motor cover and the container enclose the motor cavity 110, the motor cover and the another container jointly enclose a copper busbar accommodation cavity configured to accommodate the three-phase copper busbar 700. In an embodiment, the other end of the copper busbar cooling flow channel 102 penetrates the outer wall surface at one axial end of the housing 100 to communicate with the copper busbar accommodation cavity configured to accommodate the three-phase copper busbar 700.

In this application, the housing 100 encloses the motor cavity 110 and the copper busbar cooling flow channel 102, and the copper busbar cooling flow channel 102 is synchronously formed based on a thickness of the cavity wall of the motor cavity 110. No additional design is required for a structure, a shape, and a size of the housing 100, and manufacturing costs of the copper busbar cooling flow channel 102 are lower. In addition, the copper busbar cooling flow channel 102 is disposed on a radial outer side of the motor cavity 110, and does not interfere with another flow channel. Therefore, there is no need to change a position and a structure of the another flow channel.

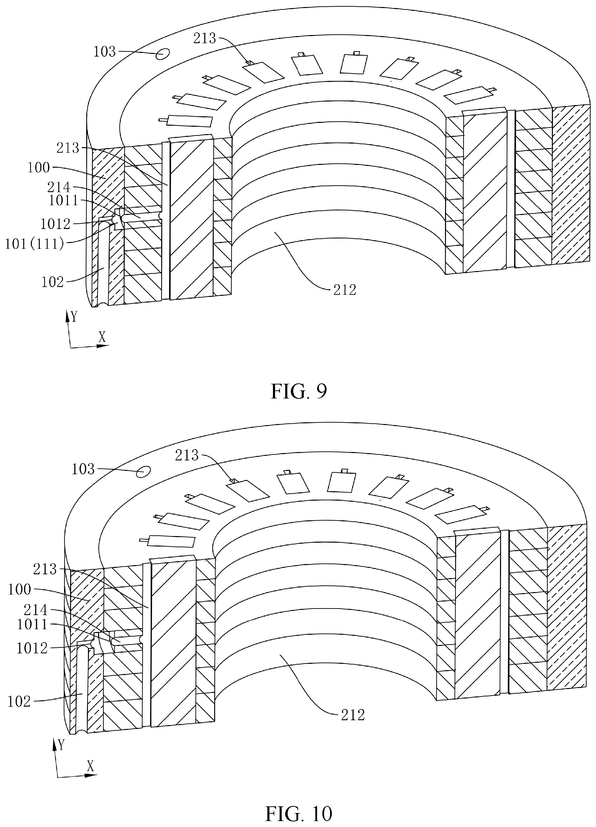

Refer to FIG. 2, FIG. 3, FIG. 4, FIG. 9, and FIG. 10. FIG. 9 is a diagram of a stator 210 according to an implementation of this application, and FIG. 10 is a diagram of a stator 210 according to an implementation of this application. In an embodiment, the inner wall of the motor cavity 110 and the stator 210 of the drive motor 200 enclose the circumferential flow channel 101, and in the circumferential direction of the drive motor 200, the circumferential flow channel 101 is configured to surround the stator 210.

In an embodiment, the circumferential flow channel 101 is a circumferential flow channel of the stator, an outer diameter of the stator 210 is equal to an inner diameter of the motor cavity 110, and an outer circumferential surface 215 of the stator 210 is in contact with the inner wall surface of the motor cavity 110.

Refer to FIG. 4. In an embodiment, the outer circumferential surface 215 of the stator 210 includes an annular groove 2151. The inner wall surface of the motor cavity 110 and an inner wall surface of the annular groove 2151 enclose to form the circumferential flow channel 101. A radial outer wall surface of the circumferential flow channel 101 is the inner wall surface of the motor cavity 110, and a radial inner wall surface of the circumferential flow channel 101 is a bottom wall of the annular groove 2151.

Refer to FIG. 9. In an embodiment, the inner wall surface of the motor cavity 110 includes another annular groove 111. The outer circumferential surface 215 of the stator 210 and an inner wall surface of the another annular groove 2151 enclose to form the circumferential flow channel 101. The radial outer wall surface of the circumferential flow channel 101 is a bottom wall of the another annular groove 111, and the radial inner wall surface of the circumferential flow channel 101 is the outer circumferential surface 215 of the stator 210.

Refer to FIG. 10. In an embodiment, the outer circumferential surface 215 of the stator 210 includes an annular groove 2151, the inner wall surface of the motor cavity 110 includes the annular groove 111, and the outer circumferential surface 215 of the stator 210 is in contact with the inner wall surface of the motor cavity 110. The annular groove 2151 and the annular groove 111 are opposite to each other in a radial direction of the stator 210. An inner wall of the groove 2151 and an inner wall of the annular groove 111 jointly enclose to form the circumferential flow channel 101. The radial outer wall surface of the circumferential flow channel 101 is a bottom wall of the annular groove 111, and the radial inner wall surface of the circumferential flow channel 101 is a bottom wall of the annular groove 2151.

Refer to FIG. 9 and FIG. 10. In an embodiment, the first liquid port 1011 is located on the radial inner wall surface of the circumferential flow channel 101, and at least one radial flow channel 214 is disposed in the radial direction of the stator 210. The radial flow channel 214 is configured to communicate with the first liquid port 1011 on the radial inner wall surface of the circumferential flow channel 101. The low-temperature oil received in the circumferential flow channel 101 enters the radial flow channel 214 through the first liquid port 1011, and further enters the axial flow channel 213 to cool the stator 210.

In an embodiment, the second liquid port 1012 is located on the radial outer wall surface of the circumferential flow channel 101, and oil is distributed to the stator cooling flow channel 211 and the copper busbar cooling flow channel 102 from two radial sides of the circumferential flow channel 101, thereby preventing crosstalk during distribution and improving distribution efficiency of the circumferential flow channel 101.

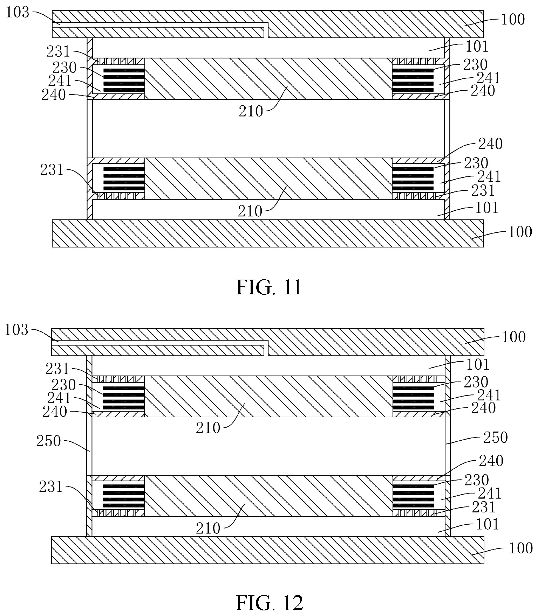

Refer to FIG. 2, FIG. 3, FIG. 11, and FIG. 12. FIG. 11 is a diagram of a stator 210 according to an implementation of this application, and FIG. 12 is a diagram of a stator 210 according to an implementation of this application. In an embodiment, in the circumferential direction of the drive motor 200, the circumferential flow channel 101 is configured to surround an end winding 230, the circumferential flow channel 101 is configured to spray oil onto the end winding 230 through a plurality of penetrating oil spray holes 231, and the stator cooling flow channel 211 is configured to receive oil sprayed from the oil spray holes 231.

In an embodiment, an oil spray ring 240 is configured to enclose an annular container 241. The annular container 241 is configured to be snapped onto an axial end face of the stator 210, and the annular container 241 is configured to accommodate the end winding 230. The circumferential flow channel 101 is an annular flow channel formed through enclosing by an outer circumferential surface of the oil spray ring 240, an outer circumferential surface of the stator 210, and an inner wall of the motor cavity 110. There are two oil spray rings 240, and the oil spray rings 240 are respectively fastened at two axial ends of the stator 210.

In an embodiment, outer circumferential surfaces of the two oil spray rings 240 are step-shaped. An outer circumferential surface of a protruding part is in contact with the inner wall of the motor cavity 110, and an outer circumferential surface of a concave part is configured to be spaced apart from an inner wall surface of the motor cavity 110. An inner wall surface of the protruding part, the inner wall surface of the motor cavity 110, an inner wall surface of the concave part, and the outer circumferential surface of the stator 210 are configured to jointly enclose the circumferential flow channel 101. In an embodiment, two ends of each of the two oil spray rings 240 are separately sealed through an end cover 250. An outer diameter of the end cover 250 is equal to an inner diameter of the motor cavity 110, and an outer diameter of the oil spray ring 240 is less than the inner diameter of the motor cavity 110. A partial inner wall surface that is of the end cover 250 and that protrudes from the outer circumferential surface of the oil spray ring 240 in a circumferential direction of the oil spray ring 240, the outer circumferential surface of the oil spray ring 240, the inner wall surface of the motor cavity 110, and the outer circumferential surface of the stator 210 are configured to jointly enclose the circumferential flow channel 101.

In an embodiment, at least one oil spray hole 231 is disposed on a radial outer circumferential surface of the annular container 241 formed through enclosing by the oil spray ring 240. A liquid outlet of the liquid inlet flow channel 103 on the inner wall of the motor cavity 110 communicates with the circumferential flow channel 101. Oil that is received by the liquid inlet flow channel 103 and that is heat-exchanged by the heat exchanger 500 enters the circumferential flow channel 101, and the oil in the circumferential flow channel 101 is sprayed onto a surface of the end winding 230 through the oil spray hole 231 under action of pressure, to cool the end winding 230.

In this embodiment, for a structure of the oil spray ring 240, the circumferential flow channel 101 enclosed by the oil spray ring 240 surrounds the end winding 230, and a part of the oil delivered by the oil spray ring 240 for cooling the end winding 230 through oil spray is distributed to deliver oil to and cool the three-phase copper busbar 700.

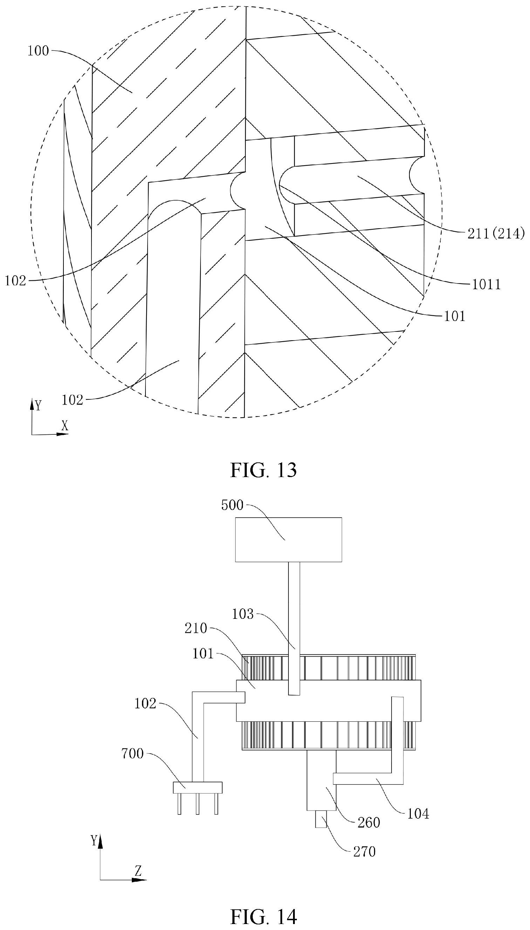

Refer to FIG. 2, FIG. 3, FIG. 4, and FIG. 13. FIG. 13 is a partial view of a powertrain 10 according to an implementation of this application. In an embodiment, one part of the copper busbar cooling flow channel 102 is configured to communicate with the circumferential flow channel 101 in a radial direction of the stator 210, and the other part of the copper busbar cooling flow channel 102 is configured to transmit oil in an axial direction of the stator 210 to cool the three-phase copper busbar 700.

In an embodiment, one part of the copper busbar cooling flow channel 102 extends in the radial direction of the stator 210. With reference to an X direction shown in FIG. 2, FIG. 4, and FIG. 13, one side of the copper busbar cooling flow channel 102 can be close to the circumferential flow channel 101, and communicates with the circumferential flow channel 101, to ensure that the oil in the circumferential flow channel 101 can flow into the copper busbar cooling flow channel 102. In an embodiment, the other part of the copper busbar cooling flow channel 102 extends in the axial direction of the stator 210. With reference to a Y direction shown in FIG. 2, FIG. 3, FIG. 4, and FIG. 13, the copper busbar cooling flow channel 102 can penetrate the inner wall of the motor cavity 110, so that the oil in the circumferential flow channel 101 can be transmitted to the three-phase copper busbar 700 through the copper busbar cooling flow channel 102, to dissipate heat for the three-phase copper busbar 700. In an embodiment, the copper busbar cooling flow channel 102 is formed when the housing 100 is injection-molded, and the housing 100 encloses to form the copper busbar cooling flow channel 102, to ensure sealing performance of the copper busbar cooling flow channel 102.

Refer to FIG. 2, FIG. 3, and FIG. 7. In an embodiment, in the axial direction of the powertrain 10, with reference to a Y direction shown in FIG. 2, FIG. 3, and FIG. 7, the copper busbar cooling flow channel 102 and the heat exchanger 500 are configured to be located on two axial sides of the powertrain 10.

In an embodiment, in the axial direction of the powertrain 10, the three-phase copper busbar 700 and the heat exchanger 500 are located on two sides of the motor stator 210, so that the motor stator 210 is connected to the three-phase copper busbar 700, and the motor stator 210 can receive, through the three-phase copper busbar 700, an alternating current output by the motor control unit 600. In an embodiment, the copper busbar cooling flow channel 102 extends along a side that is of the motor stator 210 and that faces away from the heat exchanger 500, to match the three-phase copper busbar 700 disposed on one side of the drive motor 200 in the powertrain 10, and direct oil in the heat exchanger 500 to smoothly flow to the three-phase copper busbar 700, so as to dissipate heat for the three-phase copper busbar 700.

In an embodiment, the liquid inlet flow channel 103 passes through the housing 100 and is separately connected to the heat exchanger 500 and the circumferential flow channel 101, to supplement oil in the circumferential flow channel 101 of the motor stator 210, so as to ensure an amount of oil in the copper busbar cooling flow channel 102, and implement efficient heat dissipation for the three-phase copper busbar 700. In an embodiment, the heat exchanger 500 is located on a side that is of the housing and that is close to the reducer cavity 120, so that oil driven by the oil pump can pass through the heat exchanger along the cooling loop and flow to the drive motor 200, to ensure that a temperature of oil entering the drive motor 200 is low.

In an embodiment, the three-phase copper busbar 700 is located on a side that is of the motor stator 210 and that faces away from the reducer cavity 120, to ensure that the three-phase copper busbar 700 is close to the motor stator 210, and the copper busbar cooling flow channel 102 is disposed on the side that is of the motor stator 210 and that faces away from the reducer cavity 120. In an embodiment, in the radial direction of the powertrain 10, with reference to a Z direction shown in FIG. 2, FIG. 3, and FIG. 7, the three-phase copper busbar 700 is located between the motor control unit 600 and the drive motor 200, to shorten a length of a connection line between the motor control unit 600, the three-phase copper busbar 700, and the drive motor 200.

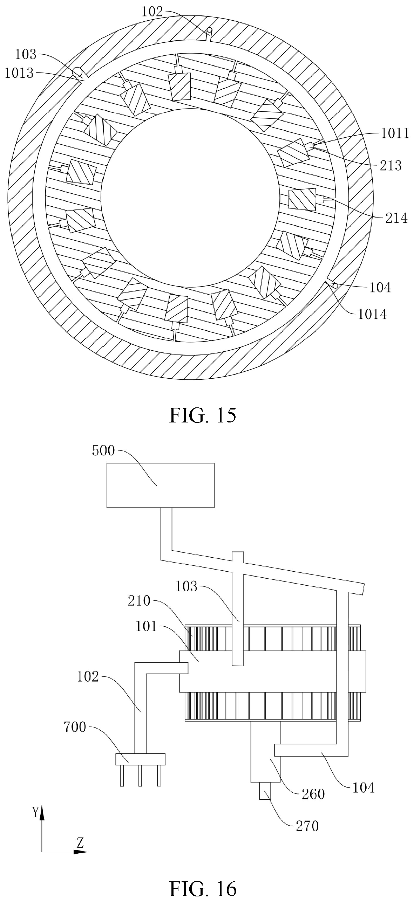

Refer to FIG. 2, FIG. 3, FIG. 14, and FIG. 15. FIG. 14 is a diagram of a powertrain 10 according to an implementation of this application, and FIG. 15 is a diagram of a stator 210 according to an implementation of this application. In an embodiment, the powertrain 10 includes a bearing cooling flow channel 104, and the bearing cooling flow channel 104 is configured to: receive oil from the circumferential flow channel 101 and transmit the oil to cool a motor bearing 260 of the drive motor 200.

In an embodiment, the drive motor 200 includes the motor bearing 260, and the motor bearing 260 is configured to provide support between the motor rotor and the housing 100, to ensure running stability of the drive motor 200. In an embodiment, when the drive motor 200 is running, the motor bearing 260 of the drive motor 200 generates a large amount of heat due to friction. If the heat from the motor bearing 260 is not processed, mechanical performance of a material of the motor bearing 260 is degraded, and a service life of the motor bearing 260 is reduced.

In an embodiment, a fourth liquid port 1014 is disposed on the inner wall of the circumferential flow channel 101, and the fourth liquid port 1014 communicates with both the circumferential flow channel 101 and the bearing cooling flow channel 104. The fourth liquid port 1014 is configured to: receive oil from the circumferential flow channel 101, and transmit the oil to the motor bearing 260 through the bearing cooling flow channel 104, so that the heat-exchanged low-temperature oil in the heat exchanger 500 can flow into the motor bearing 260 through the bearing cooling flow channel 104, to dissipate heat for and lubricate the motor bearing 260, so as to ensure running efficiency of the motor bearing 260. In an embodiment, the heat-exchanged oil in the heat exchanger 500 is transmitted to the motor bearing 260 in a directional manner through the bearing cooling flow channel 104, and the oil lubricates the motor bearing 260, so that friction of the motor bearing 260 in a running process is reduced, and the motor bearing 260 is cooled, to improve running efficiency of the drive motor 200 and reduce energy loss.

In an embodiment, the bearing cooling flow channel 104 is formed through enclosing by the housing 100 of the powertrain 10, to simplify a manufacturing process and costs of the bearing cooling flow channel 104. In an embodiment, both the bearing cooling flow channel 104 and the stator cooling flow channel 211 communicate with the circumferential flow channel 101, and a position at which the bearing cooling flow channel 104 communicates with the circumferential flow channel 101 and the position at which the stator cooling flow channel 211 communicates with the circumferential flow channel 101 are disposed at an interval, to ensure that an amount of oil in the bearing cooling flow channel 104 and the stator cooling flow channel 211 is sufficient to support lubrication and heat dissipation of the motor bearing 260 and the motor stator 210, so as to improve running efficiency of the drive motor 200.

Refer to FIG. 14 and FIG. 15. In an embodiment, the bearing cooling flow channel 104, the stator cooling flow channel 211, and the copper busbar cooling flow channel 102 are disposed in parallel, and the oil in the circumferential flow channel 101 can separately flow into the three cooling flow channels to dissipate heat for the motor bearing 260, the motor stator 210, and the three-phase copper busbar 700. In an embodiment, in the radial direction of the stator 210, the projection of the first liquid port 1011 on the inner circumferential surface of the circumferential flow channel 101 and a projection of the fourth liquid port 1014 on the inner circumferential surface of the circumferential flow channel 101 do not overlap or coincide, and the oil in the circumferential flow channel 101 flows in the circumferential direction of the stator 210. This avoids a case in which the circumferential flow channel 101 performs distribution at a same position and consequently the bearing cooling flow channel 104 and the stator cooling flow channel 211 receive an insufficient amount of oil.

Refer to FIG. 14 and FIG. 15. In an embodiment, a position at which the bearing cooling flow channel 104 communicates with the circumferential flow channel 101 and the position at which the circumferential flow channel 101 is configured to receive the oil heat-exchanged by the heat exchanger 500 are spaced apart in the circumferential direction of the drive motor 200.

In an embodiment, a position at which the liquid inlet flow channel 103 communicates with the circumferential flow channel 101 and the position at which the bearing cooling flow channel 104 communicates with the circumferential flow channel 101 are disposed at an interval in the circumferential direction of the drive motor, so that after the low-temperature oil heat-exchanged by the heat exchanger 500 flows through the circumferential flow channel 101, a temperature of the oil is correspondingly increased, and viscosity of the oil is decreased, to avoid excessively high resistance caused to rotation of the motor bearing 260 due to excessively high viscosity of the low-temperature oil, and improve lubrication efficiency of the oil for the motor bearing 260 while ensuring heat dissipation effect of the motor bearing 260. In an embodiment, the viscosity of the oil increases with a decrease of the temperature of the oil. A distance between the position at which the liquid inlet flow channel 103 communicates with the circumferential flow channel 101 and the position at which the bearing cooling flow channel 104 communicates with the circumferential flow channel 101 can be adjusted based on an actual situation, to ensure heat dissipation efficiency of oil flowing through the motor bearing 260 for the motor bearing 260, and ensure low viscosity of the oil, so as to improve efficiency of the motor bearing 260 during operation.

Refer to FIG. 16. FIG. 16 is a diagram of a powertrain 10 according to an implementation of this application. In an embodiment, the bearing cooling flow channel 104 is configured to: separately receive oil heat-exchanged by the heat exchanger 500 and the oil from the circumferential flow channel 101, and combine the two paths of oil to cool the motor bearing 260.

In an embodiment, in an axial direction of the drive motor, a length of the bearing cooling flow channel 104 is greater than a length of the stator 210, and an opening is disposed on a sidewall of the bearing cooling flow channel 104 to communicate with the circumferential flow channel 101, so as to receive low-temperature oil circulating in the circumferential flow channel 101. One end of the bearing cooling flow channel 104 bypasses the stator 210 and directly receives the oil heat-exchanged by the heat exchanger 500, and the other end of the bearing cooling flow channel 104 is connected to a cavity in which the motor bearing 260 is located. In an embodiment, one part of the oil heat-exchanged by the heat exchanger 500 enters the circumferential flow channel 101, and enters the bearing cooling flow channel 104 from a middle position of the bearing cooling flow channel 104 through the circumferential flow channel 101 to cool the motor bearing 260. The other part of the oil heat-exchanged by the heat exchanger 500 does not enter the circumferential flow channel 101, but directly enters the bearing cooling flow channel 104 from an end position of the bearing cooling flow channel 104 to cool the motor bearing 260.

In this embodiment, the bearing cooling flow channel 104 is disposed. The bearing cooling flow channel 104 may directly receive the low-temperature oil heat-exchanged by the heat exchanger 500 to cool the motor bearing 260, and synchronously receive the oil from the circumferential flow channel 101, to adjust a temperature of oil in the bearing cooling flow channel 104 through the circumferential flow channel 101, control the oil to lubricate and cool the motor bearing 260 at a proper temperature, and find an optimal balance point between the temperature and the viscosity.

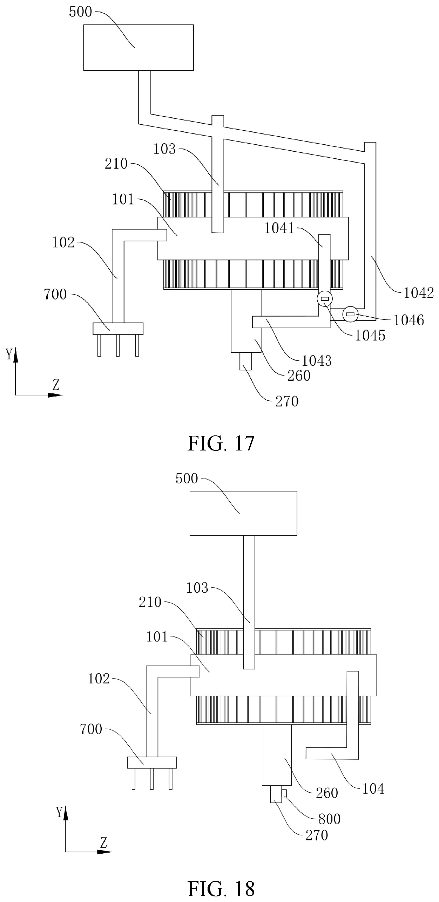

Refer to FIG. 17. FIG. 17 is a diagram of a powertrain 10 according to an implementation of this application. In an embodiment, the bearing cooling flow channel 104 includes a heat dissipation flow channel 1041, another heat dissipation flow channel 1042, and a third heat dissipation flow channel 1043. The heat dissipation flow channel 1041 is configured to communicate with the circumferential flow channel 101 and a cavity accommodating the motor bearing 260. The another heat dissipation flow channel 1042 is configured to communicate with the oil path of the heat exchanger 500 and the cavity accommodating the motor bearing 260. In the axial direction of the powertrain 10, with reference to a Y direction shown in FIG. 17, the third heat dissipation flow channel 1043 is located on one side of the heat dissipation flow channel 1041 and the another heat dissipation flow channel 1042, and the third heat dissipation flow channel 1043 communicates with both the heat dissipation flow channel 1041 and the another heat dissipation flow channel 1042, so that oil in the heat dissipation flow channel 1041 and oil in the another heat dissipation flow channel 1042 can be combined and mixed through the third heat dissipation flow channel 1043. In an embodiment, the oil heat-exchanged by the heat exchanger 500 flows into the circumferential flow channel 101 after being cooled, and the oil is transmitted through the circumferential flow channel 101, so that a temperature of the oil is increased. Therefore, a temperature of the oil in the circumferential flow channel 101 is higher than a temperature of the oil in the heat exchanger 500, that is, a temperature of the oil in the heat dissipation flow channel 1041 is higher than a temperature of the oil in the another heat dissipation flow channel 1042.

In an embodiment, when the temperature of the oil is excessively low, viscosity of the oil is increased. Consequently, resistance of the oil to the drive motor during running is increased, and lubrication effect is poor. When the temperature of the oil is excessively high, the viscosity of the oil is decreased, and the resistance of the oil to the drive motor during running is decreased. However, the oil with an excessively high temperature has poor heat dissipation effect for the motor bearing 260, and the motor bearing 260 is easily damaged due to an excessively high temperature.

In an embodiment, an amount output to the motor bearing 260 from the oil in the heat dissipation flow channel 1041 and the oil in the another heat dissipation flow channel 1042 is adjusted, to adjust the temperature of the oil, so as to reduce resistance of the oil to the motor bearing 260, reduce a temperature of the motor bearing 260, and ensure reliability of the motor bearing 260.

In an embodiment, a valve 1045 is disposed on the heat dissipation flow channel 1041, to control an amount output to the motor bearing 260 from the oil in the heat dissipation flow channel 1041. Specifically, when the temperature of the motor bearing 260 is low, the motor bearing 260 does not need to be cooled by using oil, and the valve 1045 is controlled to be opened. In this way, the oil whose temperature is increased flows into the third heat dissipation flow channel 1043, and is transmitted to the motor bearing 260 through the third heat dissipation flow channel 1043, to increase a temperature of oil in the motor bearing 260, reduce viscosity of the oil, and improve lubrication effect. In addition, if a temperature of the oil flowing through the circumferential flow channel 101 is higher than that of the heat-exchanged oil in the heat exchanger 500, the oil with a higher temperature is used to lubricate the motor bearing 260, and viscosity of the oil is small. Therefore, resistance of the oil to operation of the motor bearing 260 can be reduced, to improve running efficiency of the drive motor.

In an embodiment, another valve 1046 is disposed on the another heat dissipation flow channel 1042, to control an amount output to the motor bearing 260 from the oil in the another heat dissipation flow channel 1042. Specifically, when the temperature of the motor bearing 260 is high, the motor bearing 260 needs low-temperature oil for heat dissipation, and the another valve 1046 is controlled to be opened. In this way, the oil cooled by the heat exchanger 500 directly flows into the motor bearing 260, to implement heat dissipation for the motor bearing 260, and improve reliability of the motor bearing 260.

In an embodiment, the valve 1045 and the another valve 1046 are simultaneously opened, and flow rates of the valve 1045 and the another valve 1046 can be controlled based on an actual working condition of the motor bearing 260, to control a proportion of an amount of oil that enters the motor bearing 260 from the heat exchanger 500 and the circumferential flow channel 101, thereby achieving a relationship balance between heat dissipation effect of the motor bearing 260 and resistance during running of the motor bearing 260. In an embodiment, inner diameters of the heat dissipation flow channel 1041 and the another heat dissipation flow channel 1042 are set based on different working conditions, to adjust and control a proportion of oil, at different temperatures, that enters the third heat dissipation flow channel 1043 from the heat dissipation flow channel 1041 and the another heat dissipation flow channel 1042 for mixing, so as to ensure lubrication effect and heat dissipation effect of the oil for the motor bearing 260, thereby improving running efficiency of the powertrain 10.

Refer to FIG. 2 and FIG. 18. FIG. 18 is a diagram of a powertrain 10 with a resolver sensor 800 according to an implementation of this application. In an embodiment, the powertrain 10 includes a resolver sensor 800. A motor shaft 270 of the drive motor 200 is configured to be fastened to the resolver sensor 800, and the motor bearing 260 and the resolver sensor 800 are configured to be located on a same side of the stator 210 of the drive motor 200.

In an embodiment, the powertrain 10 further includes the resolver sensor 800. The resolver sensor 800 is located at the motor shaft 270, and is configured to detect a position and a rotation speed of the drive motor 200, to ensure stable running and running efficiency of the drive motor 200. In an embodiment, when the resolver sensor 800 detects that the rotation speed of the drive motor 200 is excessively high, a temperature of the motor bearing 260 on a resolver side is easily increased. In this case, the bearing cooling flow channel 104 communicates with the heat exchanger 500 and the motor bearing 260 on the resolver side, so that oil can be accurately transmitted from the heat exchanger 500 to the motor bearing 260 on the resolver side, to dissipate heat for the motor bearing 260 on the resolver side, so as to improve heat dissipation efficiency of the motor bearing 260 on the resolver side. In an embodiment, the bearing cooling flow channel 104 can determine an actual temperature of the motor bearing 260 on the resolver side based on a value of the rotation speed that is of the drive motor 200 and that is detected by the resolver sensor 800, and control, based on the actual temperature, an amount of oil flowing from the heat exchanger 500 to the motor bearing 260 on the resolver side, to ensure lubrication effect and heat dissipation effect of the motor bearing 260 on the resolver side, and reduce resistance of the oil to the motor bearing 260 on the resolver side, so as to improve running efficiency of the powertrain 10. In an embodiment, the bearing cooling flow channel 104 is configured to communicate with the circumferential flow channel 101 and the motor bearing 260 on the resolver side, so that oil can be accurately transmitted from the circumferential flow channel 101 to the motor bearing 260 on the resolver side, to dissipate heat for the motor bearing 260 on the resolver side, so as to improve heat dissipation efficiency of the motor bearing 260 on the resolver side.

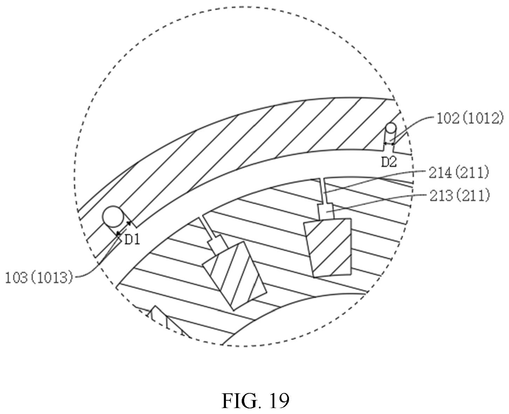

Refer to FIG. 19. FIG. 19 is a diagram of a powertrain 10 according to an implementation of this application. In an embodiment, the circumferential flow channel 101 is configured to receive, through a liquid inlet flow channel 103, the oil heat-exchanged by the heat exchanger 500, and an inner diameter D2 of the copper busbar cooling flow channel 102 is less than an inner diameter D1 of the liquid inlet flow channel 103.

In an embodiment, one part of oil in the liquid inlet flow channel 103 flows into the copper busbar cooling flow channel 102, and the other part of oil flows into the stator cooling flow channel 211 or the bearing cooling flow channel 104. In an embodiment, the inner diameter D2 of the copper busbar cooling flow channel 102 is less than the inner diameter D1 of the liquid inlet flow channel 103, to avoid a case in which the inner diameter of the copper busbar cooling flow channel 102 is excessively large and consequently an amount of oil in the liquid inlet flow channel is affected. In an embodiment, an inner diameter of the bearing cooling flow channel 104 is less than the inner diameter of the liquid inlet flow channel 103. In an embodiment, an inner diameter of the stator cooling flow channel 211 is less than the inner diameter of the liquid inlet flow channel 103.

An embodiment of this application further provides a powertrain with a plurality of liquid inlet flow channels. An oil cooling loop of the powertrain includes a circumferential flow channel and a liquid inlet flow channel. The circumferential flow channel is configured to receive, through the plurality of liquid inlet flow channels, oil heat-exchanged by a heat exchanger. The circumferential flow channel is distributed in a circumferential direction of a drive motor. Positions at which the plurality of liquid inlet flow channels communicate with the circumferential flow channel are configured to be spaced apart in the circumferential direction of the drive motor. The liquid inlet flow channel is configured to provide oil to the circumferential flow channel. In this embodiment of this application, the liquid inlet flow channel is disposed between the circumferential flow channel and the heat exchanger, so that oil can accurately flow from the heat exchanger to the circumferential flow channel, to provide oil to the circumferential flow channel for cooling the drive motor. In this way, the circumferential flow channel can distribute some oil to cool each position of the drive motor. A plurality of liquid inlet flow channels are disposed, and positions at which the plurality of liquid inlet flow channels communicate with the circumferential flow channel are disposed at an interval in the circumferential direction of the drive motor, so that an amount of oil that is obtained by the circumferential flow channel through the liquid inlet flow channels and that is heat-exchanged by the heat exchanger can be increased, to cool each position of the drive motor, and avoid a case in which there is an insufficient amount of oil in the circumferential flow channel and consequently cooling effect of the drive motor is affected. In addition, the oil in the circumferential flow channel is low-temperature oil heat-exchanged by the heat exchanger. In the manner in which a plurality of liquid inlet flow channels are connected in parallel, it can be further ensured that a temperature of the oil in the circumferential flow channel is low, to avoid a case in which heated oil in the circumferential flow channel enters the drive motor and consequently cooling efficiency for the drive motor is affected, thereby improving the cooling efficiency for the drive motor.

The following describes in detail the powertrain 10 provided in embodiments of this application.

Refer to FIG. 2, FIG. 3, and FIG. 4. In an embodiment, an oil cooling loop of the powertrain 10 includes a circumferential flow channel 101 and a liquid inlet flow channel 103. The circumferential flow channel 101 is configured to receive oil heat-exchanged by a heat exchanger 500, and the liquid inlet flow channel 103 is configured to communicate with the heat exchanger 500 and the circumferential flow channel 101, so that oil in the heat exchanger 500 can accurately flow into the circumferential flow channel 101 through the liquid inlet flow channel 103.

Refer to FIG. 2 and FIG. 5. In an embodiment, both the circumferential flow channel 101 and the liquid inlet flow channel 103 are configured to accommodate and circulate oil, and the oil flows in each flow channel under driving of an oil pump 400. In an embodiment, under driving action of the oil pump 400, the oil first flows through a housing flow channel 130 for circulation to the heat exchanger 500. The housing flow channel 130 is formed through enclosing by a housing 100. The housing flow channel 130 may be formed when the housing 100 is injection-molded. Alternatively, after the housing 100 is formed through injection molding, the housing flow channel 130 may be formed in the housing 100 by drilling a hole. In an embodiment, the housing 100 encloses an oil path of the heat exchanger 500, and the oil path of the heat exchanger 500 is configured to be close to or in contact with a water cooling flow channel of the heat exchanger 500. Oil circulating through the housing flow channel 130 enters the oil path of the heat exchanger 500, and the oil in the oil path of the heat exchanger 500 is cooled to a lower temperature through heat exchange with low-temperature water in the heat exchanger 500, and is transmitted to the liquid inlet flow channel 103 enclosed by the housing 100. The liquid inlet flow channel 103 at least partially extends in an axial direction of the powertrain 10, to transmit the low-temperature oil from a side close to a reducer cavity 120 to a position of a stator 210 of a drive motor 200.

Refer to FIG. 2 and FIG. 4. In an embodiment, the liquid inlet flow channel 103 extends in the axial direction of the powertrain 10 in a cavity wall of a motor cavity 110, and the liquid inlet flow channel 103 has an opening on an inner wall of the motor cavity 110. The opening is used to transmit the low-temperature oil to the circumferential flow channel 101 for cooling the drive motor 200. In an embodiment, the circumferential flow channel 101 is a channel that is formed through enclosing by the housing 100 and the stator 210, that has specific accommodation space, and that is configured to accommodate and circulate oil. One part of an inner wall of the circumferential flow channel 101 is the inner wall of the motor cavity 110, and the other part of the inner wall is an outer wall of the stator 210. In an embodiment, the circumferential flow channel 101 is formed through enclosing by an independent casing, and the casing and the housing 100 are of independent structures. The casing encloses to form a channel that has specific accommodation space and that is configured to accommodate and circulate oil, and the casing is fastened in the motor cavity 110. For a plurality of specific implementations of the circumferential flow channel 101, refer to detailed descriptions in the following embodiments.

Refer to FIG. 3 and FIG. 6. In an embodiment, a third liquid port 1013 is disposed on the inner wall of the circumferential flow channel 101. The third liquid port 1013 is configured to communicate with a liquid inlet flow channel 103, and the liquid inlet flow channel 103 is configured to: receive oil heat-exchanged by the heat exchanger 500, and transmit the low-temperature oil to the circumferential flow channel 101 through the third liquid port 1013. In an embodiment, the liquid inlet flow channel 103 extends in the axial direction of the powertrain 10, to transmit low-temperature oil that is heat-exchanged by the heat exchanger 500 and that is on a side that is of the powertrain 10 and that is close to a reducer 300 to the circumferential flow channel 101 surrounding a periphery of the stator 210. In an embodiment, the liquid inlet flow channel 103 is located in the cavity wall of the motor cavity 110, and low-temperature oil circulating in the liquid inlet flow channel 103 may reduce temperatures of the inner wall of the motor cavity 110 and a medium in the motor cavity 110.

Refer to FIG. 2, FIG. 7, and FIG. 8. In an embodiment, the circumferential flow channel 101 is distributed in a circumferential direction of the drive motor 200, and positions at which the circumferential flow channel 101 communicates with a plurality of liquid inlet flow channels 103 are spaced apart in the circumferential direction of the drive motor 200. The liquid inlet flow channel 103 is configured to provide low-temperature oil heat-exchanged by the heat exchanger 500 to the circumferential flow channel 101, to cool the drive motor through the circumferential flow channel 101. In an embodiment, there are a plurality of liquid inlet flow channels 103, and there are a plurality of corresponding third liquid ports 1013. Each liquid inlet flow channel 103 communicates with the circumferential flow channel 101 through at least one third liquid port 1013. The plurality of liquid inlet flow channels 103 are connected in parallel. The oil heat-exchanged by the heat exchanger 500 separately enters the plurality of liquid inlet flow channels 103, and flows into the circumferential flow channel 101 through the plurality of liquid inlet flow channels 103.

In an embodiment, the liquid inlet flow channel 103 communicates with the circumferential flow channel 101 at a position of the third liquid port 1013, and the plurality of third liquid ports 1013 are configured to be spaced apart in the circumferential direction of the drive motor 200. In an embodiment, the circumferential flow channel 101 communicates with the motor stator 210 at the position of the third liquid port 1013.

In this embodiment of this application, the liquid inlet flow channel 103 is disposed between the circumferential flow channel 101 and the heat exchanger 500, and the liquid inlet flow channel communicates with both the circumferential flow channel 101 and the heat exchanger 500, and is configured to provide low-temperature oil to the circumferential flow channel 101 for cooling the drive motor 200. In this way, the circumferential flow channel 101 can distribute some oil to cool each position of the drive motor 200. The plurality of liquid inlet flow channels 103 are disposed, and third liquid ports 1013 communicating with the plurality of liquid inlet flow channels 103 are disposed at an interval in the circumferential direction of the drive motor 200, so that an amount of oil that is obtained by the circumferential flow channel 101 through the liquid inlet flow channels 103 and that is heat-exchanged by the heat exchanger 500 can be increased, to provide a sufficient amount of oil for subsequent distribution to each component that needs to be cooled in the drive motor 200, and avoid a case in which there is an insufficient amount of oil in the circumferential flow channel 101 and consequently cooling of each component in the drive motor 200 is affected.

Refer to FIG. 7 and FIG. 8. In an embodiment, in the plurality of third liquid ports 1013, any two adjacent third liquid ports 1013 have a same spacing in the circumferential direction of the drive motor 200, so that the oil heat-exchanged by the heat exchanger 500 can uniformly flow into the circumferential flow channel 101, to ensure uniformity of the oil in the circumferential flow channel 101 in the entire flow channel. This enables the circumferential flow channel 101 to stably provide oil to each component in the drive motor 200.

Refer to FIG. 2 and FIG. 5. In an embodiment, the circumferential flow channel 101 is configured to: receive low-temperature oil heat-exchanged by the heat exchanger 500, and distribute the low-temperature oil to the drive motor 200. In an embodiment, oil circulating through the circumferential flow channel 101 is used to cool the drive motor 200 and reduce a temperature of each component that needs to be cooled in the drive motor 200. The cooled oil is discharged from the drive motor 200, flows back to the reducer cavity, is recovered by the oil pump from the reducer cavity, and is heat-exchanged by the heat exchanger 500 again. The heat-exchanged low-temperature oil enters the circumferential flow channel 101 again through the liquid inlet flow channel 103, to form circulating cooling.

Refer to FIG. 3, FIG. 4, and FIG. 6. In an embodiment, the oil cooling loop of the powertrain 10 further includes a stator cooling flow channel 211. The stator cooling flow channel 211 is configured to transmit oil and cool the stator 210 of the drive motor 200. In an embodiment, the stator cooling flow channel 211 communicates with both the circumferential flow channel 101 and the stator 210, so that oil can flow into the stator 210 from the stator cooling flow channel 211 to dissipate heat for the stator 210. In an embodiment, all of the liquid inlet flow channel 103, the circumferential flow channel 101, and the stator cooling flow channel 211 communicate with each other. The oil is transmitted to the circumferential flow channel 101 through the liquid inlet flow channel 103, and then transmitted to the stator 210 through the stator cooling flow channel 211, to ensure accurate transmission of the oil to the stator 210 and implement heat dissipation for the stator 210.

In an embodiment, the circumferential flow channel 101 is configured to surround the stator 210 of the drive motor 200 or an end winding in the circumferential direction of the drive motor 200. In this embodiment, an example in which the stator 210 is surrounded is used. A first liquid port 1011 is disposed on the inner wall of the circumferential flow channel 101. The first liquid port 1011 is configured to penetrate the inner wall of the circumferential flow channel 101, and is configured to communicate with the stator cooling flow channel 211. At least a part of the stator cooling flow channel 211 is configured to: extend in an axial direction of the stator 210, and penetrate the stator 210 in the axial direction of the stator 210. In an embodiment, the stator 210 is formed by stacking a plurality of layers of laminations 212, and each lamination 212 is provided with a penetrating through hole. Through holes on any two adjacent layers of laminations 212 are opposite to each other, and through holes on the plurality of layers of stacked laminations 212 sequentially communicate to form an axial flow channel 213. The axial flow channel 213 is configured to extend in the axial direction of the stator 210. In an embodiment, at least one radial flow channel 214 is disposed in a radial direction of the stator 210, and the radial flow channel 214 is configured to communicate with the first liquid port 1011.

Refer to FIG. 4, FIG. 6, FIG. 8, FIG. 9, and FIG. 10. In an embodiment, the stator cooling flow channel 211 includes the axial flow channel 213 and the radial flow channel 214. A quantity and positions of first liquid ports 1011 correspond to a quantity and positions of openings of the radial flow channel 214 on an outer circumferential surface of the stator. Oil circulating in the circumferential flow channel 101 enters the axial flow channel 213 through the radial flow channel 214. The axial flow channel 213 is configured to accommodate oil to reduce a temperature of the stator 210. Oil circulating through the axial flow channel 213 flows out from one end or two ends of the axial flow channel 213 to cool an end winding at one end or two ends in the axial direction of the stator 210. In an embodiment, there are a plurality of axial flow channels 213, and the plurality of axial flow channels 213 are disposed at an interval in the circumferential direction of the drive motor. A quantity of radial flow channels 214 corresponds to a quantity of axial flow channels 213, and each axial flow channel 213 receives, through the radial flow channel 214, oil delivered by the circumferential flow channel 101.

In an embodiment, the circumferential flow channel 101 is distributed in the circumferential direction of the drive motor. The stator cooling flow channel 211 is located on a radial inner side of the circumferential flow channel 101. The first liquid port 1011 configured to communicate with the radial flow channel 214 is located on an inner circumferential surface of the circumferential flow channel 101, and the first liquid port 1011 is configured to penetrate a wall surface on the radial inner side of the circumferential flow channel 101. The circumferential flow channel 101, the first liquid port 1011, and the radial flow channel 214 sequentially communicate in the radial direction of the stator 210.

Refer to FIG. 6 and FIG. 8. In an embodiment, the first liquid port 1011 through which the stator cooling flow channel 211 communicates with the circumferential flow channel 101 and the third liquid ports 1013 through which the plurality of liquid inlet flow channels 103 communicate with the circumferential flow channel 101 are disposed at an interval, to avoid a case in which all of oil flowing into the circumferential flow channel 101 from the plurality of liquid inlet flow channels 103 flows into the stator cooling flow channel 211 and consequently there is insufficient oil in the circumferential flow channel 101.

Refer to FIG. 3, FIG. 4, FIG. 7, FIG. 9, and FIG. 10. In an embodiment, the oil cooling loop of the powertrain 10 further includes a copper busbar cooling flow channel 102. The copper busbar cooling flow channel 102 is configured to transmit oil and cool a three-phase copper busbar 700. In an embodiment, the copper busbar cooling flow channel 102 communicates with both the circumferential flow channel 101 and the three-phase copper busbar 700, so that oil can flow into the three-phase copper busbar 700 from the copper busbar cooling flow channel 102 to dissipate heat for the three-phase copper busbar 700. In an embodiment, all of the liquid inlet flow channel 103, the circumferential flow channel 101, and the copper busbar cooling flow channel 102 communicate with each other. The oil is transmitted to the circumferential flow channel 101 through the liquid inlet flow channel 103, and then transmitted to the three-phase copper busbar 700 through the copper busbar cooling flow channel 102, to implement heat dissipation for the three-phase copper busbar 700.

Refer to FIG. 4, FIG. 9, and FIG. 10. In an embodiment, a second liquid port 1012 is disposed on the inner wall of the circumferential flow channel 101, and the second liquid port 1012 is configured to communicate with the copper busbar cooling flow channel 102. The oil in the circumferential flow channel 101 flows into the copper busbar cooling flow channel 102 through the second liquid port 1012, and the copper busbar cooling flow channel 102 delivers the oil to the three-phase copper busbar 700 to cool the three-phase copper busbar 700. In an embodiment, an outlet of the copper busbar cooling flow channel 102 is connected to an oil spray nozzle, and the oil is sprayed onto a surface of the three-phase copper busbar 700 through the oil spray nozzle to cool the three-phase copper busbar 700.

Refer to FIG. 2, FIG. 3, FIG. 6, FIG. 7, and FIG. 8. In an embodiment, a position at which the circumferential flow channel 101 communicates with the copper busbar cooling flow channel 102 and a position at which the circumferential flow channel 101 is configured to receive the oil heat-exchanged by the heat exchanger 500 are spaced apart in the circumferential direction of the drive motor 200.

In an embodiment, the position at which the circumferential flow channel 101 communicates with the copper busbar cooling flow channel 102 and a position at which the circumferential flow channel 101 communicates with the liquid inlet flow channel 103 are spaced apart in the circumferential direction of the drive motor 200. In an embodiment, the circumferential flow channel 101 communicates with the copper busbar cooling flow channel 102 at a position of the second liquid port 1012, and the circumferential flow channel 101 communicates with the liquid inlet flow channel 103 at a position of the third liquid port 1013, to receive the oil heat-exchanged by the heat exchanger 500. The second liquid port 1012 and the third liquid port 1013 are spaced apart in the circumferential direction of the drive motor 200.

In an embodiment, the second liquid port 1012 and the third liquid port 1013 do not overlap or coincide. In an embodiment, both the second liquid port 1012 and the third liquid port 1013 are located on an outer circumferential surface of the circumferential flow channel 101, both the copper busbar cooling flow channel 102 and the liquid inlet flow channel 103 communicate with the circumferential flow channel 101 in the radial direction of the stator 210, and both the copper busbar cooling flow channel 102 and the liquid inlet flow channel 103 are located on a radial outer side of the circumferential flow channel 101. The second liquid port 1012 and the third liquid port 1013 are spaced apart in a circumferential direction of the circumferential flow channel 101, and the low-temperature oil entering from the liquid inlet flow channel 103 does not immediately enter the copper busbar cooling flow channel 102 in the circumferential flow channel 101, but flows in the circumferential direction of the circumferential flow channel 101 for a distance. An inner wall on a radial inner side of the circumferential flow channel 101 exchanges heat with the stator 210, and heat from the stator 210 gradually heats the flowing oil, to properly increase a temperature of oil flowing into the copper busbar cooling flow channel 102 from the circumferential flow channel 101, and prevent the low-temperature oil heat-exchanged by the heat exchanger 500 from directly entering the copper busbar cooling flow channel 102 to cool the three-phase copper busbar 700 in a high-temperature state. While cooling the three-phase copper busbar 700, this prevents a sudden temperature change, in the three-phase copper busbar 700, that affects stability of electric energy transmission. In addition, the heated oil in the circumferential flow channel 101 helps decrease viscosity of the oil, and improve uniformity of oil sprayed from the copper busbar cooling flow channel 102 onto the three-phase copper busbar 700, to improve the cooling efficiency for the three-phase copper busbar 700.

Refer to FIG. 2 and FIG. 14. In an embodiment, the powertrain 10 includes a bearing cooling flow channel 104, and the bearing cooling flow channel 104 is configured to: receive oil from the circumferential flow channel 101 and transmit the oil to cool a motor bearing 260 of the drive motor 200.

In an embodiment, the drive motor 200 includes the motor bearing 260, and the motor bearing 260 is configured to support and position the drive motor 200, to ensure running stability of the drive motor 200. In an embodiment, when the drive motor 200 is running, the motor bearing 260 of the drive motor 200 generates a large amount of heat due to friction. If the heat from the motor bearing 260 is not processed, mechanical performance of a material of the motor bearing 260 is degraded, and a service life of the motor bearing 260 is reduced.

Refer to FIG. 14 and FIG. 15. In an embodiment, a fourth liquid port 1014 is disposed in the circumferential flow channel 101, and the fourth liquid port 1014 communicates with both the circumferential flow channel 101 and the bearing cooling flow channel 104. The fourth liquid port 1014 is configured to: receive oil from the circumferential flow channel 101, and transmit the oil to the motor bearing 260 through the bearing cooling flow channel 104, so that the heat-exchanged low-temperature oil in the heat exchanger 500 can flow into the motor bearing 260 through the bearing cooling flow channel 104, to dissipate heat for and lubricate the motor bearing 260, so as to ensure running efficiency of the motor bearing 260.

Refer to FIG. 14 and FIG. 15. In an embodiment, a position at which the bearing cooling flow channel 104 communicates with the circumferential flow channel 101 and the position at which the circumferential flow channel 101 is configured to receive the oil heat-exchanged by the heat exchanger 500 are spaced apart in the circumferential direction of the drive motor 200.

In an embodiment, a position at which the liquid inlet flow channel 103 communicates with the circumferential flow channel 101 and the position at which the bearing cooling flow channel 104 communicates with the circumferential flow channel 101 are disposed at an interval in the circumferential direction of the drive motor 200, so that after the low-temperature oil heat-exchanged by the heat exchanger 500 flows through the circumferential flow channel 101, a temperature of the oil is correspondingly increased, and viscosity of the oil is decreased, to avoid excessively high resistance caused to rotation of the motor bearing 260 due to excessively high viscosity of the low-temperature oil, and improve lubrication efficiency of the oil for the motor bearing 260 while ensuring heat dissipation effect of the motor bearing 260. In an embodiment, the viscosity of the oil increases with a decrease of the temperature of the oil. A distance between the position at which the liquid inlet flow channel 103 communicates with the circumferential flow channel 101 and the position at which the bearing cooling flow channel 104 communicates with the circumferential flow channel 101 can be adjusted based on an actual situation, to ensure heat dissipation efficiency of oil flowing through the motor bearing 260 for the motor bearing 260, and ensure low viscosity of the oil, so as to improve efficiency of the motor bearing 260 during operation.

Refer to FIG. 19. In an embodiment, the circumferential flow channel 101 is configured to receive, through a liquid inlet flow channel 103, the oil heat-exchanged by the heat exchanger 500, and an inner diameter D2 of the copper busbar cooling flow channel 102 is less than an inner diameter D1 of the liquid inlet flow channel 103.

In an embodiment, one part of oil in the liquid inlet flow channel 103 flows into the copper busbar cooling flow channel 102, and the other part of oil flows into the stator cooling flow channel 211 or the bearing cooling flow channel 104. In an embodiment, the inner diameter D2 of the copper busbar cooling flow channel 102 is less than the inner diameter D1 of the liquid inlet flow channel 103, to avoid a case in which the inner diameter of the copper busbar cooling flow channel 102 is excessively large and consequently an amount of oil in the liquid inlet flow channel is affected. In an embodiment, an inner diameter of the bearing cooling flow channel 104 is less than the inner diameter of the liquid inlet flow channel 103. In an embodiment, an inner diameter of the stator cooling flow channel 211 is less than the inner diameter of the liquid inlet flow channel 103.

An embodiment of this application further provides a powertrain for motor bearing heat dissipation. An oil cooling loop of the powertrain includes a circumferential flow channel, a bearing cooling flow channel, and a stator cooling flow channel. The circumferential flow channel is configured to receive oil heat-exchanged by a heat exchanger. The bearing cooling flow channel is configured to transmit oil to cool a bearing of a drive motor. The stator cooling flow channel is configured to transmit oil to cool a stator of the drive motor. The circumferential flow channel is distributed in a circumferential direction of the drive motor. A position at which the bearing cooling flow channel communicates with the circumferential flow channel and a position at which the stator cooling flow channel communicates with the circumferential flow channel are spaced apart. The bearing cooling flow channel and the stator cooling flow channel are configured to distribute oil in the circumferential flow channel. In this embodiment of this application, the circumferential flow channel for cooling the motor stator is bypassed by a bearing cooling flow channel to directly cool the bearing of the drive motor, and the oil that is received by the circumferential flow channel and that is heat-exchanged by the heat exchanger is used to cool the motor bearing, thereby improving use efficiency of an oil passage within the powertrain. In this way, the circumferential flow channel can distribute some oil to cool the bearing. In this application, the bearing cooling flow channel for cooling the motor bearing receives, through transfer by the circumferential flow channel, the oil heat-exchanged by the heat exchanger, so that an oil path between the circumferential flow channel and the heat exchanger can be used to shorten a length of the oil path, simplify a structure, and reduce costs. In addition, the oil in the circumferential flow channel is low-temperature oil heat-exchanged by the heat exchanger, and the bearing cooling flow channel split from the circumferential flow channel and the stator cooling flow channel are connected in parallel, to avoid a case in which heated oil in the stator cooling flow channel enters the bearing cooling flow channel and consequently cooling efficiency for the motor bearing is affected, thereby improving the cooling efficiency for the bearing.

The following describes in detail the powertrain 10 provided in embodiments of this application.

Refer to FIG. 2, FIG. 14, and FIG. 15. In an embodiment, an oil cooling loop of the powertrain 10 includes a circumferential flow channel 101, a bearing cooling flow channel 104, and a stator cooling flow channel 211. The circumferential flow channel 101 is configured to receive oil heat-exchanged by a heat exchanger 500. The bearing cooling flow channel 104 is configured to transmit oil to cool a motor bearing 260 of a drive motor 200. The stator cooling flow channel 211 is configured to transmit oil to cool a stator 210 of the drive motor 200.

In an embodiment, the drive motor 200 includes the motor bearing 260, and the motor bearing 260 is configured to provide support between a motor rotor and a housing 100, to ensure running stability of the drive motor 200. In an embodiment, when the drive motor 200 is running, the motor bearing 260 of the drive motor 200 generates a large amount of heat due to friction. If the heat from the motor bearing 260 is not processed, mechanical performance of a material of the motor bearing 260 is degraded, and a service life of the motor bearing 260 is reduced.

Refer to FIG. 2, FIG. 5, FIG. 14, and FIG. 15. In an embodiment, all of the circumferential flow channel 101, the bearing cooling flow channel 104, and the stator cooling flow channel 211 are configured to accommodate and circulate oil, and the oil flows in each flow channel under driving of an oil pump 400. In an embodiment, under driving action of the oil pump 400, the oil first flows through a housing flow channel 130 for circulation to the heat exchanger 500. The housing flow channel 130 is formed through enclosing by the housing 100. The housing flow channel 130 may be formed when the housing 100 is injection-molded. Alternatively, after the housing 100 is formed through injection molding, the housing flow channel 130 may be formed in the housing 100 by drilling a hole. In an embodiment, the housing 100 encloses an oil path of the heat exchanger 500, and the oil path of the heat exchanger 500 is configured to be close to or in contact with a water cooling flow channel of the heat exchanger 500. Oil circulating through the housing flow channel 130 enters the oil path of the heat exchanger 500, and the oil in the oil path of the heat exchanger 500 is cooled to a lower temperature through heat exchange with low-temperature water in the heat exchanger 500, and is transmitted to a liquid inlet flow channel 103 enclosed by the housing 100. The liquid inlet flow channel 103 at least partially extends in an axial direction of the powertrain 10, to transmit the low-temperature oil from a side close to a reducer cavity 120 to a position of the stator 210 of the drive motor 200.

In an embodiment, the liquid inlet flow channel 103 extends in the axial direction of the powertrain 10 in a cavity wall of a motor cavity 110, and the liquid inlet flow channel 103 has an opening on an inner wall of the motor cavity 110. The opening is used to transmit the low-temperature oil to the circumferential flow channel 101 for cooling the drive motor 200. In an embodiment, the circumferential flow channel 101 is a channel that is formed through enclosing by the housing 100 and the stator 210, that has specific accommodation space, and that is configured to accommodate and circulate oil. One part of an inner wall of the circumferential flow channel 101 is the inner wall of the motor cavity 110, and the other part of the inner wall is an outer wall of the stator 210. In an embodiment, the circumferential flow channel 101 is formed through enclosing by an independent casing, and the casing and the housing 100 are of independent structures. The casing encloses to form a channel that has specific accommodation space and that is configured to accommodate and circulate oil, and the casing is fastened in the motor cavity 110. For a plurality of specific implementations of the circumferential flow channel 101, refer to detailed descriptions in the following embodiments.

In an embodiment, the circumferential flow channel 101 is distributed in a circumferential direction of the drive motor 200. A position at which the circumferential flow channel 101 communicates with the bearing cooling flow channel 104 and a position at which the circumferential flow channel 101 communicates with the stator cooling flow channel 211 are spaced apart in the circumferential direction of the drive motor 200. The bearing cooling flow channel 104 and the stator cooling flow channel 211 are configured to distribute oil in the circumferential flow channel 101.

Refer to FIG. 4, FIG. 14, and FIG. 15. In an embodiment, the circumferential flow channel 101 is configured to surround the stator 210 of the drive motor 200 or an end winding in the circumferential direction of the drive motor 200. In this embodiment, an example in which the stator 210 is surrounded is used. Two liquid ports are disposed on the inner wall of the circumferential flow channel 101, and both the two liquid ports are configured to penetrate the inner wall of the circumferential flow channel 101. A first liquid port 1011 is configured to communicate with the stator cooling flow channel 211. At least a part of the stator cooling flow channel 211 is configured to: extend in an axial direction of the stator 210, and penetrate the stator 210 in the axial direction of the stator 210. In an embodiment, the stator 210 is formed by stacking a plurality of layers of laminations 212, and each lamination 212 is provided with a penetrating through hole. Through holes on any two adjacent layers of laminations 212 are opposite to each other, and through holes on the plurality of layers of stacked laminations 212 sequentially communicate to form an axial flow channel 213. The axial flow channel 213 is configured to extend in the axial direction of the stator 210. In an embodiment, at least one radial flow channel 214 is disposed in a radial direction of the stator 210, and the radial flow channel 214 is configured to communicate with the first liquid port 1011.

Refer to FIG. 13. In an embodiment, the stator cooling flow channel 211 includes the axial flow channel 213 and the radial flow channel 214. A quantity and positions of first liquid ports 1011 correspond to a quantity and positions of openings of the radial flow channel 214 on an outer circumferential surface of the stator. Oil circulating in the circumferential flow channel 101 enters the axial flow channel 213 through the radial flow channel 214. The axial flow channel 213 is configured to accommodate oil to reduce a temperature of the stator 210. Oil circulating through the axial flow channel 213 flows out from one end or two ends of the axial flow channel 213 to cool an end winding at one end or two ends in the axial direction of the stator 210. In an embodiment, there are a plurality of axial flow channels 213, and the plurality of axial flow channels 213 are disposed at an interval in the circumferential direction of the drive motor. A quantity of radial flow channels 214 corresponds to a quantity of axial flow channels 213, and each axial flow channel 213 receives, through the radial flow channel 214, oil delivered by the circumferential flow channel 101.

In an embodiment, the circumferential flow channel 101 is distributed in the circumferential direction of the drive motor 200. The stator cooling flow channel 211 is located on a radial inner side of the circumferential flow channel 101. The first liquid port 1011 configured to communicate with the radial flow channel 214 is located on an inner circumferential surface of the circumferential flow channel 101, and the first liquid port 1011 is configured to penetrate a wall surface on the radial inner side of the circumferential flow channel 101. The circumferential flow channel 101, the first liquid port 1011, and the radial flow channel 214 sequentially communicate in the radial direction of the stator 210.

Refer to FIG. 14 and FIG. 15. In an embodiment, a fourth liquid port 1014 is further disposed at the circumferential flow channel 101, and the fourth liquid port 1014 is configured to communicate with the bearing cooling flow channel 104. A part of the oil in the circumferential flow channel 101 flows into the bearing cooling flow channel 104 through the fourth liquid port 1014, and the bearing cooling flow channel 104 delivers the oil to the motor bearing 260 to cool the motor bearing 260. In an embodiment, an outlet of the bearing cooling flow channel 104 is connected to an oil spray nozzle, and the oil is sprayed onto a surface of the motor bearing 260 through the oil spray nozzle to cool the motor bearing 260.

Refer to FIG. 2, FIG. 5, FIG. 14, and FIG. 15. In an embodiment, the circumferential flow channel 101 is configured to: receive low-temperature oil heat-exchanged by the heat exchanger 500, and distribute the low-temperature oil to the stator cooling flow channel 211 and the bearing cooling flow channel 104. In an embodiment, oil circulating through the stator cooling flow channel 211 is used to cool the stator 210, to reduce the temperature of the stator 210. The cooled oil is discharged from the drive motor 200, flows back to the reducer cavity 120, is recovered by the oil pump 400 from the reducer cavity 120, and is heat-exchanged by the heat exchanger 500 again. The heat-exchanged low-temperature oil enters the circumferential flow channel 101 again, to form circulating cooling. In an embodiment, oil circulating through the bearing cooling flow channel 104 is used to cool the motor bearing 260, to reduce a temperature of the motor bearing 260. The cooled oil is discharged from an accommodation cavity of the motor bearing 260, flows back to the reducer cavity 120, is recovered by the oil pump 400 from the reducer cavity 120, and is heat-exchanged by the heat exchanger 500 again. The heat-exchanged low-temperature oil enters the circumferential flow channel 101 again, to form circulating cooling.

In an embodiment, the circumferential flow channel 101 communicates with the bearing cooling flow channel 104 at a position of the fourth liquid port 1014, and the circumferential flow channel 101 communicates with the stator cooling flow channel 211 at a position of the first liquid port 1011. The first liquid port 1011 and the fourth liquid port 1014 are spaced apart. In an embodiment, the first liquid port 1011 and the fourth liquid port 1014 do not overlap or coincide. Oil circulating through the first liquid port 1011 does not enter the bearing cooling flow channel 104, and oil circulating through the fourth liquid port 1014 does not enter the stator cooling flow channel 211.

In this embodiment of this application, the circumferential flow channel 101 for cooling the motor stator 210 is bypassed by a bearing cooling flow channel 104 to directly cool the motor bearing 260, and the oil that is received by the circumferential flow channel 101 and that is heat-exchanged by the heat exchanger 500 is used to cool the motor bearing 260, thereby improving use efficiency of an oil passage within the powertrain 10. In this way, the circumferential flow channel 101 can distribute some oil to cool the motor bearing 260. In this application, the bearing cooling flow channel 104 for cooling the motor bearing 260 receives, through transfer by the circumferential flow channel 101, the oil heat-exchanged by the heat exchanger 500, so that an oil path between the circumferential flow channel 101 and the heat exchanger 500 can be used to shorten a length of the oil path, simplify a structure, and reduce costs. In addition, the oil in the circumferential flow channel 101 is low-temperature oil heat-exchanged by the heat exchanger 500, and the bearing cooling flow channel 104 split from the circumferential flow channel 101 and the stator cooling flow channel 211 are connected in parallel, to avoid a case in which heated oil in the stator cooling flow channel 211 enters the bearing cooling flow channel 104 and consequently cooling efficiency for the motor bearing 260 is affected, thereby improving the cooling efficiency for the motor bearing 260.

In an embodiment, it should be noted that in the foregoing embodiments of this application, only the motor bearing 260 is used as an example to provide an embodiment in which the low-temperature oil that is received from the circumferential flow channel 101 and that is heat-exchanged by the heat exchanger 500 is distributed to the motor bearing 260 to cool the motor bearing 260. On a basis of the foregoing embodiments, for other components that need to be cooled, for example, a three-phase copper busbar, a structure similar to the bearing cooling flow channel 104 may be used for flow guiding and heat dissipation.

Refer to FIG. 14 and FIG. 15. In an embodiment, the position at which the bearing cooling flow channel 104 communicates with the circumferential flow channel 101 and a position at which the circumferential flow channel 101 is configured to receive the oil heat-exchanged by the heat exchanger 500 are spaced apart in the circumferential direction of the drive motor 200.

In an embodiment, a position at which the liquid inlet flow channel 103 communicates with the circumferential flow channel 101 and the position at which the bearing cooling flow channel 104 communicates with the circumferential flow channel 101 are disposed at an interval in the circumferential direction of the drive motor 200, so that after the low-temperature oil heat-exchanged by the heat exchanger 500 flows through the circumferential flow channel 101, a temperature of the oil is correspondingly increased, and viscosity of the oil is decreased, to avoid excessively high resistance caused to rotation of the motor bearing 260 due to excessively high viscosity of the low-temperature oil, and improve lubrication efficiency of the oil for the motor bearing 260 while ensuring heat dissipation effect of the motor bearing 260. In an embodiment, the viscosity of the oil increases with a decrease of the temperature of the oil. A distance between the position at which the liquid inlet flow channel 103 communicates with the circumferential flow channel 101 and the position at which the bearing cooling flow channel 104 communicates with the circumferential flow channel 101 can be adjusted based on an actual situation, to ensure heat dissipation efficiency of oil flowing through the motor bearing 260 for the motor bearing 260, and ensure low viscosity of the oil, so as to improve efficiency of the motor bearing 260 during operation.

Refer to FIG. 16. In an embodiment, the bearing cooling flow channel 104 is configured to: separately receive oil heat-exchanged by the heat exchanger 500 and the oil from the circumferential flow channel 101, and combine the two paths of oil to cool the motor bearing 260.

In an embodiment, in an axial direction of the drive motor 200, a length of the bearing cooling flow channel 104 is greater than a length of the stator 210, and an opening is disposed on a sidewall of the bearing cooling flow channel 104 to communicate with the circumferential flow channel 101, so as to receive low-temperature oil circulating in the circumferential flow channel 101. One end of the bearing cooling flow channel 104 bypasses the stator 210 and directly receives the oil heat-exchanged by the heat exchanger 500, and the other end of the bearing cooling flow channel 104 is connected to a cavity in which the motor bearing 260 is located. In an embodiment, one part of the oil heat-exchanged by the heat exchanger 500 enters the circumferential flow channel 101, and enters the bearing cooling flow channel 104 from a middle position of the bearing cooling flow channel 104 through the circumferential flow channel 101 to cool the motor bearing 260. The other part of the oil heat-exchanged by the heat exchanger 500 does not enter the circumferential flow channel 101, but directly enters the bearing cooling flow channel 104 from an end position of the bearing cooling flow channel 104 to cool the motor bearing 260.

In this embodiment, the bearing cooling flow channel 104 is disposed. The bearing cooling flow channel 104 may directly receive the low-temperature oil heat-exchanged by the heat exchanger 500 to cool the motor bearing 260, and synchronously receive the oil from the circumferential flow channel 101, to adjust a temperature of oil in the bearing cooling flow channel 104 through the circumferential flow channel 101, control the oil to lubricate and cool the motor bearing 260 at a proper temperature, and find an optimal balance point between the temperature and the viscosity.

Refer to FIG. 17. In an embodiment, the bearing cooling flow channel 104 includes a heat dissipation flow channel 1041, another heat dissipation flow channel 1042, and a third heat dissipation flow channel 1043. The heat dissipation flow channel 1041 is configured to communicate with the circumferential flow channel 101 and a cavity accommodating the motor bearing 260. The another heat dissipation flow channel 1042 is configured to communicate with the oil path of the heat exchanger 500 and the cavity accommodating the motor bearing 260. In the axial direction of the powertrain 10, with reference to a Y direction shown in FIG. 17, the third heat dissipation flow channel 1043 is located on one side of the heat dissipation flow channel 1041 and the another heat dissipation flow channel 1042, and the third heat dissipation flow channel 1043 communicates with both the heat dissipation flow channel 1041 and the another heat dissipation flow channel 1042, so that oil in the heat dissipation flow channel 1041 and oil in the another heat dissipation flow channel 1042 can be combined and mixed through the third heat dissipation flow channel 1043. In an embodiment, the oil heat-exchanged by the heat exchanger 500 flows into the circumferential flow channel 101 after being cooled, and the oil is transmitted through the circumferential flow channel 101, so that a temperature of the oil is increased. Therefore, a temperature of the oil in the circumferential flow channel 101 is higher than a temperature of the oil in the heat exchanger 500, that is, a temperature of the oil in the heat dissipation flow channel 1041 is higher than a temperature of the oil in the another heat dissipation flow channel 1042.

In an embodiment, when the temperature of the oil is excessively low, viscosity of the oil is increased. Consequently, resistance of the oil to the drive motor during running is increased, and lubrication effect is poor. When the temperature of the oil is excessively high, the viscosity of the oil is decreased, and the resistance of the oil to the drive motor during running is decreased. However, the oil with an excessively high temperature has poor heat dissipation effect for the motor bearing 260, and the motor bearing 260 is easily damaged due to an excessively high temperature.

In an embodiment, an amount output to the motor bearing 260 from the oil in the heat dissipation flow channel 1041 and the oil in the another heat dissipation flow channel 1042 is adjusted, to adjust the temperature of the oil, so as to reduce resistance of the oil to the motor bearing 260, reduce a temperature of the motor bearing 260, and ensure reliability of the motor bearing 260.

In an embodiment, a valve 1045 is disposed on the heat dissipation flow channel 1041, to control an amount output to the motor bearing 260 from the oil in the heat dissipation flow channel 1041. Specifically, when the temperature of the motor bearing 260 is low, the motor bearing 260 does not need to be cooled by using oil, and the valve 1045 is controlled to be opened. In this way, the oil whose temperature is increased flows into the third heat dissipation flow channel 1043, and is transmitted to the motor bearing 260 through the third heat dissipation flow channel 1043, to increase a temperature of oil in the motor bearing 260, reduce viscosity of the oil, and improve lubrication effect. In addition, if a temperature of the oil flowing through the circumferential flow channel 101 is higher than that of the heat-exchanged oil in the heat exchanger 500, the oil with a higher temperature is used to lubricate the motor bearing 260, and viscosity of the oil is small. Therefore, resistance of the oil to operation of the motor bearing 260 can be reduced, to improve running efficiency of the drive motor 200.

In an embodiment, another valve 1046 is disposed on the another heat dissipation flow channel 1042, to control an amount output to the motor bearing 260 from the oil in the another heat dissipation flow channel 1042. Specifically, when the temperature of the motor bearing 260 is high, the motor bearing 260 needs low-temperature oil for heat dissipation, and the another valve 1046 is controlled to be opened. In this way, the oil cooled by the heat exchanger 500 directly flows into the motor bearing 260, to implement heat dissipation for the motor bearing 260, and improve reliability of the motor bearing 260.

In an embodiment, the valve 1045 and the another valve 1046 are simultaneously opened, and flow rates of the valve 1045 and the another valve 1046 can be controlled based on an actual working condition of the motor bearing 260, to control a proportion of an amount of oil that enters the motor bearing 260 from the heat exchanger 500 and the circumferential flow channel 101, thereby achieving a relationship balance between heat dissipation effect of the motor bearing 260 and resistance during running of the motor bearing 260. In an embodiment, inner diameters of the heat dissipation flow channel 1041 and the another heat dissipation flow channel 1042 are set based on different working conditions, to adjust and control a proportion of oil, at different temperatures, that enters the third heat dissipation flow channel 1043 from the heat dissipation flow channel 1041 and the another heat dissipation flow channel 1042 for mixing, so as to ensure lubrication effect and heat dissipation effect of the oil for the motor bearing 260, thereby improving running efficiency of the powertrain 10.

Refer to FIG. 18. In an embodiment, the powertrain 10 includes a resolver sensor 800. A motor shaft 270 of the drive motor 200 is configured to be fastened to the resolver sensor 800, and the motor bearing 260 and the resolver sensor 800 areconfigured to be located on a same side of the stator 210 of the drive motor.

In an embodiment, the powertrain 10 further includes the resolver sensor 800. The resolver sensor 800 is located at the motor shaft 270, and is configured to detect a position and a rotation speed of the drive motor, to ensure stable running and running efficiency of the drive motor. In an embodiment, when the resolver sensor 800 detects that the rotation speed of the drive motor is excessively high, a temperature of the motor bearing 260 on a resolver side is easily increased. In this case, the bearing cooling flow channel 104 communicates with the heat exchanger 500 and the motor bearing 260 on the resolver side, so that oil can be accurately transmitted from the heat exchanger 500 to the motor bearing 260 on the resolver side, to dissipate heat for the motor bearing 260 on the resolver side, so as to improve heat dissipation efficiency of the motor bearing 260 on the resolver side. In an embodiment, the bearing cooling flow channel 104 can determine an actual temperature of the motor bearing 260 on the resolver side based on a value of the rotation speed that is of the motor and that is detected by the resolver sensor 800, and control, based on the actual temperature, an amount of oil flowing from the heat exchanger 500 to the motor bearing 260 on the resolver side, to ensure lubrication effect and heat dissipation effect of the motor bearing 260 on the resolver side, and reduce resistance of the oil to the motor bearing 260 on the resolver side, so as to improve running efficiency of the powertrain 10. In an embodiment, the bearing cooling flow channel 104 is configured to communicate with the circumferential flow channel 101 and the motor bearing 260 on the resolver side, so that oil can be accurately transmitted from the circumferential flow channel 101 to the motor bearing 260 on the resolver side, to dissipate heat for the motor bearing 260 on the resolver side, so as to improve heat dissipation efficiency of the motor bearing 260 on the resolver side.

The foregoing embodiments are merely intended to describe the technical solutions in this application, but not intended to limit this application. Although this application is described in detail with reference to the foregoing embodiments, persons of ordinary skill in the art should understand that they may still make modifications to the technical solutions described in the foregoing embodiments or make equivalent replacements to some technical features thereof. However, these modifications or replacements do not make the essence of the corresponding technical solutions depart from the scope of the technical solutions in embodiments of this application, and shall fall within the protection scope of this application.

## Claims

1. A powertrain for three-phase copper busbar heat dissipation, wherein the powertrain comprises a drive motor and a three-phase copper busbar, the drive motor is configured to receive, through the three-phase copper busbar, an alternating current output by a motor control unit, an oil cooling loop of the powertrain comprises a circumferential flow channel, a copper busbar cooling flow channel, and a stator cooling flow channel, the circumferential flow channel is configured to receive oil heat-exchanged by a heat exchanger, the copper busbar cooling flow channel is configured to transmit oil to cool the three-phase copper busbar, and the stator cooling flow channel is configured to transmit oil to cool a stator of the drive motor; and
the circumferential flow channel is distributed in a circumferential direction of the drive motor, a position at which the circumferential flow channel communicates with the copper busbar cooling flow channel and a position at which the circumferential flow channel communicates with the stator cooling flow channel are spaced apart, and the copper busbar cooling flow channel and the stator cooling flow channel are configured to distribute oil in the circumferential flow channel.

2. The powertrain according to claim 1, wherein the position at which the circumferential flow channel communicates with the copper busbar cooling flow channel and a position at which the circumferential flow channel is configured to receive the oil heat-exchanged by the heat exchanger are spaced apart in the circumferential direction of the drive motor.

3. The powertrain according to claim 1 or 2, wherein the position at which the circumferential flow channel communicates with the copper busbar cooling flow channel and the position at which the circumferential flow channel communicates with the stator cooling flow channel are spaced apart in the circumferential direction of the drive motor.

4. The powertrain according to any one of claims 1 to 3, wherein the circumferential flow channel is configured to receive, through a plurality of liquid inlet flow channels, the oil heat-exchanged by the heat exchanger, and positions at which the plurality of liquid inlet flow channels communicate with the circumferential flow channel are be spaced apart in the circumferential direction of the drive motor.

5. The powertrain according to any one of claims 1 to 4, wherein a housing of the powertrain encloses a motor cavity and the copper busbar cooling flow channel, the motor cavity is configured to accommodate the stator of the drive motor, and the copper busbar cooling flow channel is configured to: penetrate an inner wall of the motor cavity and communicate with the circumferential flow channel.

6. The powertrain according to claim 5, wherein the inner wall of the motor cavity and the stator of the drive motor enclose the circumferential flow channel, and in the circumferential direction of the drive motor, the circumferential flow channel is configured to surround the stator.

7. The powertrain according to claim 5, wherein in the circumferential direction of the drive motor, the circumferential flow channel is configured to surround end winding, the circumferential flow channel is configured to spray oil onto the end winding through a plurality of penetrating oil spray holes, and the stator cooling flow channel is configured to receive oil sprayed from the oil spray holes.

8. The powertrain according to any one of claims 1 to 7, wherein one part of the copper busbar cooling flow channel is configured to communicate with the circumferential flow channel in a radial direction of the stator, and the other part of the copper busbar cooling flow channel is configured to transmit oil in an axial direction of the stator to cool the three-phase copper busbar.

9. The powertrain according to any one of claims 1 to 8, wherein in an axial direction of the powertrain, the copper busbar cooling flow channel and the heat exchanger are configured to be located on two axial sides of the powertrain.

10. The powertrain according to any one of claims 1 to 9, wherein the powertrain comprises a bearing cooling flow channel, and the bearing cooling flow channel is configured to: receive oil from the circumferential flow channel and transmit the oil to cool a bearing of the drive motor.

11. The powertrain according to claim 10, wherein a position at which the bearing cooling flow channel communicates with the circumferential flow channel and the position at which the circumferential flow channel is configured to receive the oil heat-exchanged by the heat exchanger are spaced apart in the circumferential direction of the drive motor.

12. The powertrain according to claim 11, wherein the bearing cooling flow channel is configured to: separately receive oil heat-exchanged by the heat exchanger and the oil from the circumferential flow channel, and combine the two paths of oil to cool the bearing.

13. The powertrain according to any one of claims 10 to 12, wherein the powertrain comprises a resolver sensor, a motor shaft of the drive motor is configured to be fastened to the resolver sensor, and the bearing and the resolver sensor are configured to be located on a same side of the stator of the drive motor.

14. The powertrain according to any one of claims 1 to 13, wherein the circumferential flow channel is configured to receive, through a liquid inlet flow channel, the oil heat-exchanged by the heat exchanger, and an inner diameter of the copper busbar cooling flow channel is less than an inner diameter of the liquid inlet flow channel.

15. An electric vehicle, comprising a wheel and the powertrain according to any one of claims 1 to 14, wherein the powertrain is configured to drive the wheel to rotate.
